# EUROPEAN PATENT SPECIFICATION

(11) **EP 3 774 374 B1**
(45) Date of publication and mention of the grant of the patent: **07.06.2023**
(21) Application number: 19716232.4
(22) Date of filing: 29.03.2019
(51) Int. Cl.: B42D 25/324, B42D 25/351, B42D 25/364, B42D 25/373, B42D 25/29, B42D 25/425, B42D 25/45

(54) **OPTICAL DEVICE AND METHOD OF MANUFACTURE THEREOF**
OPTISCHE VORRICHTUNG UND VERFAHREN ZUR HERSTELLUNG DAVON
DISPOSITIF OPTIQUE ET SON PROCÉDÉ DE FABRICATION

(30) Priority: 29.03.2018 GB 201805209
(43) Date of publication of application: 17.02.2021
(73) Proprietor: De La Rue International Limited, Basingstoke, Hampshire RG22 4BS (GB)
(72) Inventor: LISTER, Adam, Andover, Hampshire SP10 2ND (GB); GODFREY, John, Basingstoke, Hampshire RG21 7UQ (GB)
(74) Representative: Gill Jennings & Every LLP
(86) International application number: PCT/GB2019/050915
(87) International publication number: WO 2019/186189

(56) References cited:
- EP-A1- 3 216 620
- EP-A1- 3 287 294
- EP-A2- 2 161 598
- WO-A1-2013/022699
- WO-A1-2018/037208

## Description

### FIELD OF THE INVENTION

The present invention relates to optical devices which exhibit one or more images when illuminated with light. Optical devices have a wide range of applications, including decorative uses. A particularly preferred form of optical device to which the invention can be applied is a security device. Security devices are used for example on documents of value such as banknotes, cheques, passports, identity cards, certificates of authenticity, fiscal stamps and other secure documents, in order to confirm their authenticity. Methods of manufacturing optical devices are also disclosed.

Optical devices of the sorts disclosed herein find application in many industries. For example, decorative optical devices having a purely aesthetic function may be applied to packaging to enhance its appearance, or similarly to articles such as mobile phone covers, greetings cards, badges, stickers and the like.

Devices in accordance with the invention find particular utility however in the field of security devices.

### BACKGROUND TO THE INVENTION

Articles of value, and particularly documents of value such as banknotes, cheques, passports, identification documents, certificates and licences, are frequently the target of counterfeiters and persons wishing to make fraudulent copies thereof and/or changes to any data contained therein. Typically such objects are provided with a number of visible security devices for checking the authenticity of the object. By "security device" we mean a feature which it is not possible to reproduce accurately by taking a visible light copy, e.g. through the use of standardly available photocopying or scanning equipment. Examples include features based on one or more patterns such as microtext, fine line patterns, latent images, venetian blind devices, lenticular devices, moiré interference devices and moiré magnification devices, each of which generates a secure visual effect. Other known security devices include holograms, watermarks, embossings, perforations and the use of colour-shifting or luminescent / fluorescent inks. Common to all such devices is that the visual effect exhibited by the device is extremely difficult, or impossible, to copy using available reproduction techniques such as photocopying. Security devices exhibiting non-visible effects such as magnetic materials may also be employed.

One class of optical devices are those which produce an optically variable effect, meaning that the appearance of the device is different at different angles of view and/or illumination. Such devices are particularly effective as security devices since direct copies (e.g. photocopies) will not produce the optically variable effect and hence can be readily distinguished from genuine devices. Optically variable effects can be generated based on various different mechanisms, including holograms and other diffractive devices, moiré interference and other mechanisms relying on parallax such as venetian blind devices, and also devices which make use of focusing elements such as lenses, including moiré magnifier devices, integral imaging devices and so-called lenticular devices.

One well-known type of optically variable device is one which uses a colour shifting material to produce an optically variable effect that is difficult to counterfeit. Such a colour shifting material generates a coloured appearance which changes dependent on the viewing angle. Examples of known colour shifting structures include photonic crystals, liquid crystals, interference pigments, pearlescent pigments, structured interference materials or thin film interference structures including Bragg stacks.

New optical devices are constantly being sought in order to achieve more distinctive and recognisable optical effects and especially, in the field of security devices, to stay ahead of counterfeiters.

EP-A-2161598, EP-A-3287294 and WO2013/022699 each disclose examples of security devices that utilise a colour shifting layer and a surface relief.

WO2018/037208 discloses a method of manufacturing an image array for an optical device, and EP-A-3216620 descries a security device comprising a carrier having a reflective surface area which is subdivided into a plurality of reflective pixels.

### SUMMARY OF THE INVENTION

In accordance with a first aspect of the invention there is provided an optical device as defined in claim 1.

Herein, the term "normal viewing angle" is used to refer to viewing the optical device along a direction that is substantially parallel to the normal of the optical device. The first viewing angle corresponds to viewing the optical device along a direction that is off the normal of the optical device. The change from the normal viewing angle to the first viewing angle is typically achieved by tilting the device relative to the observer.

Although the optical device has an array of microstructures that form a surface relief, the device is considered to lie in a plane, e.g. defined by the colour shifting layer, with the normal of the optical device being perpendicular to that plane.

The optical device according to the invention exhibits a particularly striking optically variable effect, in that at a substantially normal viewing angle (i.e. when viewing the device along a direction substantially parallel to the normal of the optical device), the device exhibits a base colour, and at the first viewing angle, the device exhibits a colour image. Therefore, upon changing the viewing angle in this manner (e.g. "tilting" the device with respect to the observer), a colour image is revealed, which is both aesthetically pleasing and difficult to counterfeit. When utilised as a security device, this provides enhanced security and difficulty of counterfeiting.

The revealed image is a colour image, which may be single-coloured or multi-coloured. A single-coloured image may be exhibited, for example, if the sub-arrays are arranged such that each pixel exhibits the same uniform colour. In preferred embodiments however, the revealed colour image is a multi-coloured image exhibiting two or more colours. The term "uniform" is used to mean that the perceived colour at all portions of a pixel is the same.

The term "pixel" means a portion of the image exhibited by the optical device. The image exhibited by the optical device is typically based on a "source" image, but it is to be noted that the pixels of the optical device itself do not necessarily correspond to the base units of the source image at its original resolution. For example, as will be described below, the source image may be a "pixelated" version of an original input image to create larger pixels which are subsequently used to form the array of microstructures.

The first and second sub-arrays of microstructures correspond to respective first and second colour channels, with each sub-array covering an area within a pixel corresponding to the proportion of the respective colour channel to be exhibited by the pixel such that it exhibits the uniform colour. Each pixel comprises first and second colour channels - preferably of equal area - with each colour channel being assigned a nominal colour. The refractive properties of the microstructures of the first and second sub-arrays are such that, at the first viewing angle, the first sub-array exhibits the colour of the first colour channel (the first colour), and the second sub-array exhibits the colour of the second colour channel (the second colour). The pixel then exhibits the desired uniform colour at the first viewing angle by (preferably additive) colour mixing of the colours of the first and second colour channels in the relative proportions defined by the first and second sub-arrays. For example, if the uniform colour to be exhibited by the pixel comprises a 2:1 ratio of the first colour channel to the second colour channel, then the relative areas of the colour channels covered by the respective first and second sub-arrays will be 2:1.

The microstructures corresponding to the first colour channel of each pixel together form the first sub-array, and the microstructures corresponding to the second colour channel of each pixel together form the second sub-array, with the first and second sub-arrays together forming the array of microstructures. Thus, each sub-array covers an area within each pixel corresponding to the proportion of the respective colour channels of the pixels such that the device exhibits the colour image at the second viewing angle.

The microstructures are configured such that, at the first viewing angle, the colours of the pixels correspond to the colour of the source image. However, it will be appreciated that the image information may be perceived at different viewing angles (angles of tilt), but with different colours as compared to the source image. This may be referred to as a "false colour" image exhibited by the device.

Preferably, the colour channels (e.g. each) have a dimension such that they are not discernible to the naked human eye, meaning that they cannot be seen by the unaided human eye without the use of magnification equipment. It is conventionally understood that the naked human eye cannot perceive dimensions less than 150µm (e.g. at typical viewing distances of the device of 20-30cm). Therefore, preferably, the colour channels have a dimension less than 150µm, preferably less than 100µm and more preferably less than 70µm. Due to the individual colour channels not being discernible to the naked human eye, the colours within a pixel exhibited due to the first and second sub-arrays are perceived by the observer as a single uniform colour as a result of (preferably additive) colour mixing.

Each sub-array preferably has a dimension such that it is not discernible to the naked human eye. In other words, each sub-array preferably has a dimension less than 150 microns, preferably less than 100 microns and even more preferably less than 70 microns.

Although the invention may be implemented with two sub-arrays corresponding to two colour channels, in preferred embodiments, the array of microstructures further comprises a third sub-array corresponding to a respective third colour channel, the third sub-array covering an area within a pixel corresponding to the proportion of the third colour channel within the pixel such that the pixel exhibits the uniform colour, wherein; the microstructures of the third sub-array are configured to modify the angle of light incident to, and reflected from, the colour shifting layer in a third manner different to the first and second manners such that, at a substantially normal viewing angle of the optical device, the third sub-array exhibits said base colour and at said first viewing angle, the third sub-array exhibits a third colour different from the first and second colours. Preferably, the first, second and third sub-arrays correspond to red, green and blue channels respectively. As a result, the uniform colour of each pixel may be any colour formed from red, green and blue additive colour mixing.

Preferably, the array of microstructures comprises at least three, preferably exactly three, sub-arrays, the sub-arrays preferably corresponding to red, green and blue colour channels. In embodiments, the array of microstructures may comprise exactly four sub-arrays corresponding to cyan, magenta, yellow and black. In this way, substantially any colour for a pixel may be created by mixing the available colours (provided by the microstructures of the sub-arrays) in the appropriate proportions. In some embodiments, the array of microstructures may comprise a further sub-array corresponding to a further ("spot colour") colour channel, which colour that is not capable of being produced by mixing of the other colour channels.

A particular advantage of the present invention is that no registration is required between the colour shifting layer and the array of microstructures. The colour image is exhibited as a result of control of the angle of incidence of light impinging on the colour shifting layer due to refraction by the microstructures. In other words, the term "configured to modify the angle of light incident to, and reflected from, the colour shifting layer" is used to describe the refraction of light that occurs at the surface of the microstructures. The microstructures of the invention may therefore be described as refractive microstructures. The refractive characteristics of the microstructures vary the amount of refraction that occurs at the facets of the microstructures, and therefore the angle of incidence of light impinging on the colour shifting layer (and consequently the exhibited colour) can be controlled. By varying the refractive characteristics of the microstructures in order to control the exhibited colours, and by arranging the microstructures in accordance with pixels of an image to be displayed, the device may be advantageously manufactured without registration between the colour shifting layer and the array of microstructures.

In order that light incident on the device is refracted by the microstructures and subsequently incident on the colour shifting layer, the microstructures are at least partially transparent. Here the term "at least partially transparent" means that light is able to pass through the microstructures and that the colour shifting layer and its optically variable effect is visible through the microstructures. The term "at least partially transparent" includes "translucent".

The microstructures of the first sub-array are configured to modify the angle of light incident to, and reflected from, the colour shifting layer in a first manner such that, at the first viewing angle, the first sub-array exhibits a first colour, and the microstructures of the second sub-array are configured to modify the angle of light incident to, and reflected from, the colour shifting layer in a second manner different to the first such that, at said first viewing angle, the second sub-array exhibits a second colour different from the first colour. In other words, the microstructures of the first and second sub-arrays have different refractive characteristics such that, at the first viewing angle (e.g. angle of tilt), the regions of the device comprising the first and second sub-arrays exhibit different colours.

The microstructures could take various forms, provided that they may be configured to refract light incident on the optical device to varying extents in order that the desired colours corresponding to the colour channels are exhibited at at least one viewing angle. Preferably however, each microstructure comprises at least one planar or curved face which makes a facet angle of more than 0°, and less than or equal to 90°, with the plane of the colour shifting layer. Facet angles of less than 90° are preferred, but angles of 90° can produce the desired effect, given that the light source will typically be to the side of the device and hence the incident beam will strike a 90° facet at a glancing angle. One such planar or curved face to each microstructure is sufficient (for instance, any opposing face could have a facet angle which is greater than 90°). However, it is preferred that each microstructure comprises at least two planar or curved faces each as defined above, opposing one another. In this way both faces can contribute to effect exhibited by the optical device. Further, one could be planar while the other is curved.

For ease of explanation, each microstructure may be seen to have a primary axis orientated in a first direction lying in the plane of the optical device, with the at least one planar or curved surface making a facet angle with the colour shifting layer extending along the primary axis. The device exhibits the variable optical effect most strikingly when viewed at an orientation substantially perpendicular to the primary axes of the microstructures. In other words, the primary axis is substantially perpendicular to a tilt direction between a substantially normal viewing angle of the device and the first viewing angle. A common way of effecting the change in viewing angle is to rotate ("tilt") the optical device about a tilt axis substantially parallel to the primary axes of the microprisms. Hence, in other words, the primary axes of the microstructures may be orientated in a first direction in the plane of the device, with the change of viewing angle effected by rotating the device about a tilt axis substantially parallel with the first direction.

The viewing angle is typically varied by "tilting" or rotating the device about an axis lying in the plane of the device and/or rotating the device within its plane (i.e. rotation about an axis normal to the plane of the device)

Preferably, the microstructures are each symmetrical about their primary axis. Preferably, the microstructures are anisotropic microstructures.

In preferred embodiments, the microstructures of different sub-arrays have different facet angles such that, at the first viewing angle, the sub-arrays exhibit different colours corresponding to their respective colour channels. In other words, light impinging on the facets of the first sub-array is refracted by a different amount as compared to light impinging on the facets of the second sub-array, and as such light impinges on the colour shifting layer at different angles of incidence for the first and second sub-arrays. The facet angles are chosen such that the desired colours are exhibited at the first viewing angle. For example, the facet angles of the first sub-array may be chosen such that red light is exhibited at the first viewing angle, and the facet angles of the second sub-array may be chosen such that blue light is exhibited at the first viewing angle. Each microstructure within a sub-array preferably has substantially the same facet angle.

Although it is preferred that the refractive characteristics of the microstructures are determined by the facet angles, it will be appreciated that the microstructures of the sub-arrays may exhibit differing refractive characteristics in different ways. For example, the microstructures of different sub-arrays may have the same facet angles but different orientations in the plane of the device such that, at the first viewing angle, the sub-arrays exhibit different colours due to different amounts of refraction occurring at the facets as a result of the rotational offset. Alternatively or in addition, the microstructures of different sub-arrays may have different refractive indices such that, at the first viewing angle, the sub-arrays exhibit the desired different colours. In general, the microstructures of the sub-arrays are configured to modify the angle of light incident to and reflected from the colour shifting layer in differing manners due to differences in one or more of: (a) facet angle, (b) orientation, and (c) refractive index.

In preferred embodiments, the microstructures are prisms extending along their primary axis and preferably having a cross-section which is a triangle, a trapezium, an arch, a circular segment or an elliptical segment. Typically, the prisms are elongate along their primary axis. In the case of prisms, the faces parallel to the primary axis make up the majority of the surface area of the microstructures where light may be refracted, and as such the end faces of the prisms have a negligible contribution to the effects exhibited by the optical device. As a result, as explained above, the variable optical effect exhibited by the device is typically most visible when viewed along a direction (orientation) substantially perpendicular to the primary axes of the prisms. In other words the variable optical effect exhibited by the device is typically most visible when viewed in a viewing plane that intersects the plane of the device along a direction substantially perpendicular to the primary axes of the microstructures.

The facet angle of such microprisms may be constant (e.g. in the case of a triangular cross-section with planar facets), or may continuously vary between the base of the microprism and its top (e.g. in the case of a circular cross-section).

In alternative embodiments, the microstructures may be pyramids (truncated or not truncated) with straight-edged bases - e.g. triangular, square, rectangular or hexagonal bases. In this case, a variable optical effect may be exhibited at more than one orientation of the device, rather than substantially one orientation as in the case for prisms as described above. However, in the case of pyramidal microstructures, the colour image will only be exhibited when the device is viewed at a particular device orientation corresponding to the arrangement of pixels of the image.

It should be noted that in all cases, the shapes mentioned need not be regular versions of those shapes. For example, prisms with an irregular triangle cross-section could be used, such as may form a sawtooth structure in combination. Further, the faces of the elements may not be perfectly flat or may not follow a precise curve, depending on the manufacturing process used. For instance, if the elements are formed by printing, while overall their surface will follow the preferences indicated above, on a smaller scale it may be somewhat irregular.

In preferred embodiments, the microprisms within a sub-array have a pitch (e.g. the width of a microprism perpendicular to its primary axis) of between 1µm and 100µm, preferably between 10µm and 70µm, more preferably between 5µm and 70µm, and even more preferably between 20µm and 40µm. Preferably, each microstructure has a height in the range of 1µm to 100µm, preferably in the range of 5µm to 40µm. In particularly preferred embodiments, each microstructure of the array has the same height, with microstructures of different sub-arrays having different facet angles. As such the pitches of the different sub-arrays differ. Typically, the facets of adjacent microstructures abut one another, although this is not essential.

Preferably, each pixel of the array that exhibits a non-zero proportion of a colour channel comprises at least three microstructures, preferably at least five microstructures, of the respective sub-array corresponding to that colour channel. This ensures that a good visual effect is exhibited. For example, a sub-array that comprises microstructures configured to exhibit a red colour will cover the requisite proportion of each pixel required to exhibit red light with at least three (preferably five) microstructures. Thus, typically, there is a relationship between the pixel size used and the pitch of the microstructures. Typically, pixels used in the present invention have a size of between 50µm and 500µm, preferably between 100µm and 300µm, and more preferably between 50 and 150 microns. For example, for an optical device having a pixel size of 100 microns, the maximum pitch of the microstructures used in the array is approximately 33 microns. The height of the microstructures may be varied to control the facet angle within the constraints of the microstructure pitch.

Typically, the microstructures have a refractive index different from any material in contact with the microstructures. Depending on the construction of the optical device the microstructures might be exposed to air (in which case the elements will automatically have a different refractive index) or may be in contact with another material, such as a protective coating, in which case it is necessary to ensure that the refractive indexes are sufficiently different so as not to "index out" the microstructures. For instance, a refractive index difference of at least 0.3 is preferred. Typical values of the refractive index of the microstructures are in the range of 1.3 to 1.8, preferably 1.4 to 1.7, and typically 1.6.

As has been described above, the uniform colour exhibited by a pixel at the first viewing angle is determined by the relative amounts (area) of the colour channels within the pixel covered by the respective sub-arrays. Typically, it is the extent to which the microstructures of a sub-array extend along a dimension of the respective colour channel that determines the proportion of that colour channel to be exhibited by that pixel. Take for example, an example where the colour channels are formed as elongate rectangular strips with the microstructures taking the form of linear microprisms. The amount of area of such a colour channel covered by the respective sub-array is determined by the extent to which each the microprisms extend across the width of the colour channel (i.e. the dimension of the microprisms along their primary axes). The microprisms of such sub-arrays abut one another in a direction perpendicular to their primary axes, with the sub-array extending the length of the pixel, such that the area covered is determined by the dimension of the microprisms along their primary axes. However, other arrangements of microstructures such that the relevant proportions of colour channels are exhibited are envisaged.

Typically, the array of microstructures comprises regions absent of microstructures. For example, the first colour channel of a pixel may be fully covered by its respective sub-array, but the second colour channel of that pixel may only be partially covered. The remainder of the second colour channel for that pixel is therefore absent of microstructures and, as such, at the first viewing angle, the colour exhibited by the area absent of microstructures is the colour exhibited by the colour shifting layer in isolation. Preferably, the colour shifting layer is chosen such that, at the first viewing angle the regions absent of microstructures appear black and therefore do not contribute to the perceived colour of that pixel. Therefore a preferred colour shifting layer is an "infra-red to red" colour shifting layer that reflects light in the infra-red portion of the electromagnetic spectrum for viewing angles (e.g. "tilt angles") of between approximately 0° and 75°, and reflects red light for tilt angles greater than approximately 75°. Thus, at the first viewing angle (typically between 30° and 60°), the colour shifting layer reflects infra-red light, and when used with a black absorbing layer positioned beneath the colour shifting layer, appears black (as the black absorbing layer is visible through the colour shifting layer for these viewing angles).

Another preferred example of a colour shifting layer is an "infra-red" to "infra-red" colour shifting layer that, in isolation, has a very small wavelength transition on a change in viewing angle, such that it appears black (in combination with a dark, e.g. black absorbing layer underneath) at substantially each viewing angle at which the device is intended to be viewed. Where the microstructures are provided on such a colour shifting layer, light within the visible part of the electromagnetic spectrum (which would normally be totally internally reflected at the boundary between the colour shifting layer and the air, and thus not perceived by an observer) is exhibited by the device such that the colour image may be perceived.

In other embodiments, different colour shifting layers, such as a red to green colour shifting layer, may be used, and the colour exhibited by the colour shifting layer in isolation may be taken into account when configuring the sub-arrays of microstructures in order that the pixel exhibits the desired uniform colour at the first viewing angle.

The expressions "IR-black", "IR-IR" and "Red to green" refer to the range of wavelengths of light (colours) that are reflected from the colour shifting layers in isolation across substantially all viewing angles.

The expression "colour shifting layer" is used to refer to any material or structure which can selectively reflect or transmit incident light to create an optically variable effect, in particular an angularly dependent coloured reflection or transmission. Examples of such a colour shifting layer include photonic crystals, liquid crystals, interference pigments, pearlescent pigments, structured interference materials or thin film interference structures including Bragg stacks and Fabry-Perot stacks. In the case where a colour shifting layer or structure comprises individual layers, (e.g. an absorber layer, dielectric layer and reflective layer), for the purposes of this description, such a structure is referred to as a "colour shifting layer".

In general the colour shifting layer may be substantially opaque or partially transparent. A partially transparent colour shifting element (for example a layer of cholesteric liquid crystal material) transmits at least some of the light that is incident upon it as well as providing an optical effect in reflection. An example of a substantially opaque colour shifting layer is an optically variable pigment. Optically variable pigments having a colour shift between two distinct colours, with the colour shift being dependent on the viewing angle, are well known. The production of these pigments, their use and their characteristic features are described in, *inter-alia,* US-B-4434010, US-B-5059245, US-B-5084351, US-B-5135812, US-B-5171363, US-B-5571624, EP-A-0341002, EP-A-0736073, EP-A-668329, EP-A-0741170 and EP-A-1114102. Optically variable pigments having a viewing angle-dependent shift of colour are based on a stack of superposed thin-film layers with different optical characteristics. The hue, the amount of colour shifting and the chromaticity of such thin-film structures depend *inter alia* on the material constituting the layers, the sequence and the number of layers, the layer thickness, as well as on the production process. Generally, optically variable pigments comprise an opaque totally reflecting layer, a dielectric layer of a low refractive index material (i.e. with an index of refraction of 1.65 or less) deposited on top of the opaque layer and a semi-transparent partially reflecting layer applied on the dielectric layer.

The colour shifting layer may be a cholesteric liquid crystal layer. Cholesteric liquid crystals have certain unique properties in the chiral nematic phase. It is the chiral nematic phase which produces an angularly dependent coloured reflection and a difference in colour when viewed in either transmission or reflection. Cholesteric liquid crystals form a helical structure which reflects circularly polarised light over a narrow band of wavelengths. The wavelength is a function of the pitch of the helical structure which is formed by alignment within the liquid crystal material. Chiral dopants may be used to induce a helical ordering and thus create a chiral nematic phase (N*), also referred to as a cholesteric phase. As understood by the skilled person, in order to shift the liquid crystal colour to longer wavelengths (towards the IR part of the electromagnetic spectrum) we reduce the level of chiral dopant in the system. If we want to shift it to the shorter wavelength (blue end) we increase the level of chiral dopant. Thus, the dopant level may be adjusted to generate the desired colour shift (e.g. IR-red or IR-IR). Examples of liquid crystal colour shifting layers that may be used include nematic liquid crystal mixture MLC-6422 (commercially available from Merck Darmstadt, Germany), nematic liquid crystal mixture E63 (from Merck Ltd) and nematic liquid crystal mixture BL080 (from Merck Ltd). Commercially available chiral dopants include R-811 or CB 15 (commercially available from Merck KGaA, Darmstadt).

As the device is intended to be viewed in reflection, if a partially transparent colour shifting layer is used, the device preferably comprises an absorbing layer positioned beneath the colour shifting layer (i.e. on a distal side of the colour shifting layer with respect to the microstructures and observer) configured to absorb transmitted light. Typically, such an absorbing layer is black.

The "revealing" of a colour image on a change in viewing angle (e.g. "tilting") of the optical device is a particularly striking visual effect exhibited by the optical device of the present invention, particularly if the observer is initially unaware that a colour image may be present. In some embodiments, the colour image exhibited at the first viewing angle may be part of a larger image exhibited by the optical device. For example, the optical device may comprise a portion (e.g. a "border") of a larger image that is visible at all viewing angles (e.g. formed by conventional printing), with the remaining portion of the larger image only revealed - and thus the full larger image being exhibited to the observer - at the first viewing angle. Here, the remaining portion of the larger image comprises the colour shifting layer and array of microstructures as discussed above.

The use of the tilting of the device (i.e. change in viewing angle) in order to reveal the full larger image is a striking effect, that further increases the difficulty of counterfeit. In such an example, the portion of the larger image that is revealed at the first viewing angle forms an image in its own right.

In one embodiment, the optical device may further comprise a second array of substantially transparent microstructures covering at least a part of the colour shifting layer and configured to modify the angle of light incident to, and reflected from, the colour shifting layer, and arranged in accordance with a plurality of pixels of a second colour image to be exhibited by the optical device, each pixel of the second colour image exhibiting a uniform colour, wherein; the second array of microstructures comprises at least first and second sub-arrays of microstructures corresponding to respective first and second colour channels of the second colour image, each sub-array covering an area within a pixel corresponding to the proportion of the respective colour channel within the pixel such that the pixel exhibits the uniform colour, and further wherein, within the second array; the microstructures of the first sub-array are configured to modify the angle of light incident to, and reflected from, the colour shifting layer in a first manner such that, at a substantially normal viewing angle of the optical device, the first sub array exhibits the base colour and at a second viewing angle of the optical device, the first sub-array exhibits a first colour, wherein said second viewing angle corresponds to viewing the optical device along a direction that is off the normal of the optical device, said second viewing angle being different to said first viewing angle and; the microstructures of the second sub-array are configured to modify the angle of light incident to, and reflected from, the colour shifting layer in a second manner different to the first such that, at a substantially normal viewing angle of the optical device, the second sub-array exhibits said base colour and at said second viewing angle, the second sub-array exhibits a second colour different from the first colour; such that at a substantially normal viewing angle, the optical device exhibits the base colour, and at said second viewing angle, the optical device exhibits the second colour image.

Such embodiments provide a particularly striking optically variable effect, as two colour images may be revealed by the same optical device. When utilised as a security device, this beneficially increases the level of security of the device.

The microstructures of the first array and the microstructures of the second array may be interlaced with each other and orientated in different directions within the plane of the device, such that at the first viewing angle the device exhibits the first colour image and at the second viewing angle the device exhibits the second colour image. In other words, the microstructures of the first array each have a first orientation within the plane of the device and the microstructures of the second array each have a second orientation within the plane of the device, with the first and second orientations being different.

In such embodiments, the first viewing angle lies within a viewing plane that interests the plane of the device along a first viewing direction, and the second viewing angle lies within a viewing plane that intersects the plane of the device along a second viewing direction, and wherein the first and second viewing directions are non-parallel. In other words, the first and second viewing angles may be changed by varying the angle of tilt and rotation of the device. This rotational aspect may be described as viewing the device at different viewing orientations.

Typically, each microstructure has a primary axis orientated in a first direction lying in the plane of the optical device, wherein the first viewing direction is substantially perpendicular to the primary axes of the microstructures of the first array, and the second viewing direction is substantially perpendicular to the primary axes of the microstructures of the second array. This is because, as described above, the device exhibits the variable optical effect most strikingly when viewed at an orientation substantially perpendicular to the primary axes of the microstructures.

Typically, the first colour image is different to the second colour image.

The microstructures of the first array are typically orientated at an angle of between 0° and 180° to the microstructures of the second array, preferably 90°. In other words, for the preferred case where the microstructures of the first array are orientated at 90° to the microstructures of the second array, the observer is required to rotate the device through 90° in order to change from one image to the other.

It is particularly preferred that the microstructures of the sub-arrays of each array have the same orientation and their refractive properties differ through facet angle. In such a case, the orientation of each array may be defined by the primary axes of its microstructures. However, in other embodiments, the refractive properties of the sub-arrays of an array may differ by microstructure orientation, as described above. In such a case, the array as a whole may be seen as having an orientation that is a function (e.g. average) of the orientations of its sub-arrays, and it is the average orientation of the first and second arrays that are orientated in different directions.

Preferably, the microstructures of the first and second arrays are configured to exhibit their respective colours at the same angle of tilt of the device. In other words, for a device using red, green and blue colour channels, the facet angles of the "red" microstructures of the first array are the same as the facet angles of the "red" microstructures of the second array, and similarly for the "green" and "blue" microstructures.

The first and second arrays are interlaced with each other. Typically, the first and second source images are divided into a plurality of image segments that together cooperate to form the image. The first and second arrays are arranged in accordance with the image segments, and interlaced such that at the first viewing angle, the first plurality of image segments (and thus the first image) are exhibited, and at the second viewing angle, the second plurality of image segments (and thus the second image) are exhibited. Preferably, each image segment has a dimension such that it is not perceivable to the naked human eye such that the observer perceives a substantially continuous image.

Thus, in embodiments, the first array is arranged as a plurality of first image segments that in combination form the first colour image, and the second array is arranged as a plurality of second image segments that in combination form the second colour image, and wherein the plurality of first image segments are interlaced with the plurality of second image segments. The image segments may be elongate and the direction of interlacing substantially perpendicular to the direction of elongation. In an alternative to such "one-dimensional" interlacing, the image segments may be arranged in a grid pattern, such that the image segments of the first and second arrays are interlaced along two (preferably orthogonal) directions.

It is envisaged that three or more arrays (e.g. images) may be interlaced in such a manner. It will be appreciated that due to the pixel size restrictions due to the interlacing, the colour saturation of the final images exhibited by the device will be reduced as compared to a device exhibiting a single image. For example, a device exhibiting two interlaced images will have a colour saturation reduction of 50% as compared to a single image device.

The above description refers to devices that comprise two or more arrays that are interlaced with each other. In some alternative embodiments, the optical device may comprise first and (e.g. at least) second arrays of microstructures, wherein the first array and (e.g. at least) second array are laterally spaced from each other. The first and second arrays are laterally spaced in that they do not overlap. Thus, the first and second arrays may substantially abut one another, or may be positioned such that there is a gap region between the arrays.

Although in such embodiments comprising at least two laterally spaced arrays the microstructures of the arrays may have different orientations, preferably, the microstructures of the first array and the microstructures of the second array have substantially the same orientation within the plane of the device. Thus, the first and second viewing angles lie within substantially the same viewing plane.

A particularly secure optically variable effect is provided when the first and second colour images are substantially the same. As discussed above, the microstructures of the first array are configured such that the first colour image is exhibited at the first viewing angle, and the microstructures of the second array are configured such that the second colour image is exhibited at the second viewing angle. This is due to the facet angles (and/or orientation and/or refractive index) of the corresponding microstructures of the arrays differing. Consequently, at the first viewing angle, the device will exhibit a "true colour" version of the colour image in the region of the first array, and a "false colour" version of that same colour image in the region of the second array, and vice-versa at the second viewing angle. This effect is extremely difficult to counterfeit and thus provides a high level of security when the optical device is used as a security device.

By a "true colour" version of the colour image, we mean that each colour of the colour image exhibited by the device is substantially the same as the corresponding colour of a source image from which the exhibited image is derived. In contrast, in the "false colour" version, each colour in the source image is swapped for another.

In further preferred embodiments, the device may comprise a further third array of microstructures laterally spaced from the first and second arrays, wherein the microstructures of the third array are configured to exhibit the base colour at a substantially normal viewing angle, and a third colour image at a third viewing angle that is different to the first and second viewing angles. Typically, the third colour image is substantially the same as the first and second colour images. This provides the visual effect of the "true colour" version of the colour image appearing to move across the device as the device is tilted between the respective viewing angles.

Herein, two or more colour images are described as substantially the same if they have substantially the same pixel arrangement. In other words, they exhibit the same information. For example, the "true colour" and "false colour" images discussed above are considered as different versions of the same image. In alternative embodiments, the first and second images may differ from each other. Two or more images differ from each other if they have different pixel arrangements. Different images may be described as exhibiting different information.

In the embodiments discussed above where the device comprises first and second arrays of microstructures, preferably, the arrangement of the sub-arrays of the different arrays correspond (e.g. both arrays use R,G,B colour channels). Thus, preferably, the second array of microstructures further comprises a third sub-array corresponding to a respective third colour channel, the third sub-array covering an area within a pixel corresponding to the proportion of the third colour channel within the pixel such that the pixel exhibits the uniform colour, wherein; the microstructures of the third sub-array are configured to modify the angle of light incident to, and reflected from, the colour shifting layer in a third manner different to the first and second manners such that, at a substantially normal viewing angle of the optical device, the third sub-array exhibits said base colour and at said second viewing angle, the third sub-array exhibits a third colour different from the first and second colours, preferably wherein said first, second and third sub-arrays of the second array of microstructures correspond to red, green and blue colour channels respectively.

The optical device is preferably a security device but could alternatively be configured for use in other fields, such as decorative uses e.g. on packaging or advertising. A security device is typically used for authentication of secure documents and increasing the difficulty of counterfeit of such documents.

In accordance with a second aspect of the invention there is provided a security article comprising an optical device as described above, wherein the security article is preferably formed as a security thread, strip, foil, insert, label, patch or a substrate for a security document. Such a substrate may be a polymer (typically polycarbonate, polyethylene terephthalate (PET) or polyethylene terephthalate glycol-modified (PETG)) security sheet for a passport for example, or may comprise a substrate for an identity card. In the case where the security article is formed as such a substrate, this beneficially allows for ease of personalisation of the final security document, and improves security of the document as the security device is integrated into the document itself.

In accordance with a third aspect of the invention there is provided a security document comprising an optical device or a security article each as described above. Preferably, the security document is formed as a banknote, cheque, passport, identity card, certificate of authenticity, fiscal stamp or another document for securing value or personal identity. The security document may comprise a substrate with a transparent window portion and the optical device is located at least partially within the transparent window portion. For instance, the security document could comprise a translucent or opaque document substrate, made for example of paper or a paper/polymer multilayer construction, and include a window region in which the substrate is absent so as to reveal therein a security article such as a thread or strip on which the optical device is carried. Alternatively, the security document could comprise a transparent document substrate, e.g. a polymer banknote or a plastic ID document such as a passport, a portion of which is left substantially uncovered by opacifying materials to form a window region. The optical device could be formed directly on the transparent document substrate.

The security document may comprise a substrate wherein the device is integrated into the substrate. For example, the security document may be a passport containing a polycarbonate security sheet in which the device is integrated; the security sheet of the finished passport having personal information associated with the holder printed onto it.

In accordance with a fourth aspect of the invention there is provided a method of manufacturing an optical device as defined in claim 14.

Thus, the method of the fourth aspect of the invention results in an optical device of the sort already described above, and with the associated advantages. The method of the fourth aspect may be adapted to manufacture an optical device according to any of the preferred features of the first aspect discussed above.

The array of microstructures is formed in accordance with a template defining a plurality of pixels of a colour image to be exhibited by the optical device. The colour image exhibited by the optical device at the first viewing angle is typically based on a source image. Typically the template comprises a plurality of template pixels corresponding to image pixels of the source image. Preferably this is a one to one ("1:1") mapping such that the number of template pixels is equal to the number of pixels in the source image. Each template pixel defines the relative amount of each colour channel to be exhibited by the optical device such that the colour exhibited by the optical device for that template pixel corresponds to the colour of the image pixel for the source image. Thus, if the template comprises two or more template pixels deriving from image pixels that were the same colour in the source image, those template pixels will define the same relative amounts of each colour channel to be exhibited by the device. On the other hand, template pixels deriving from image pixels which were different colours in the source image will define differing relative amounts of each colour channel to be exhibited by the device.

The microstructures of the array are formed such that, at the first viewing angle, the colours of the colour image exhibited by the optical device are the same colours as the source image. However, at other viewing angles (e.g. angles of tilt), due to the interaction between the colour shifting layer and the microstructures, the colours exhibited by the device may not correspond to the colours of the source image, and as such at these viewing angles the device exhibits a "false-colour" version of the source image, e.g. swapping each colour in the source image for another.

The template may be generated prior to performing the steps of the method. In alternative embodiments, the method may further comprise the steps of providing a source colour image comprising a plurality of image pixels, each image pixel exhibiting a uniform colour, and; for each image pixel of the source colour image, creating a corresponding template pixel based on the colour of the respective image pixel, each template pixel comprising an arrangement of at least two colour channels and their relative proportions required to generate the uniform colour for that pixel, wherein the colour image exhibited by the device at the first viewing angle is a version of the source colour image. Typically these steps will be performed using one or more appropriately programmed processors.

The source colour image that is provided could already be formed as an array of pixels of the desired size. However, in other cases the method may include an additional step of creating this version of the source image from some original input image. This could for example be a bitmap, jpeg or any other image format and may already be formed of pixel-type elements although these may not be of the desired resolution. For instance, the original input image may have pixels at a higher resolution (i.e. smaller size) than it is desired to replicate in the optical device. Hence in preferred examples, the method comprises providing an original input version of the source image and converting it to the desired source image by dividing the input version into a grid of pixels of predetermined size and allocating each pixel a single colour based on the original colour(s) of the respective portion of the image. Thus if for example the original input image is formed of pixels at a resolution four times that desired in the optical device, the conversion may involve averaging the colour of each set of four adjacent pixels to produce one new pixel at the desired size. Preferably, all of the pixels of any one image are of the same size and shape, which will typically be square or rectangular. Other pixel shapes are envisaged such as hexagonal or circular pixels. The pixels should preferably be sufficiently small that the naked human eye sees a substantially continuous image and not the individual pixels. In preferred embodiments the pixels have a size of between 50µm and 500µm, preferably between 100µm and 300µm, and more preferably between 50 and 150 microns. Typically, the pixel size that is used is influenced by the size of the final device and its application. For example, if the optical device is to be used as a security device on a security thread in a banknote (typically ~4mm wide), smaller pixel sizes may be used in comparison to if the security device is to be applied to or integrated within a security page for a passport.

Typically, each template pixel comprises colour zones defining the relative proportions of the first and second colour channels to be exhibited by the device based on the colour of the corresponding image pixel, and wherein; the sub-arrays are provided according to the colour zones of template pixels. For example, if the uniform colour to be exhibited by the device for a particular template pixel is generated by a 2:1 ratio of the first and second colour channels, then the colour zone for the first colour channel will cover twice the area of the colour zone for the second colour channel (assuming that the colour channels for each pixel are of equal area, which preferably they are). The microstructures of the device sub-arrays are then formed according to the respective colour zones of the template pixels. For example, the microstructures of the first sub-array will be formed so as to substantially cover its respective colour zone, and similarly for the microstructures of the second sub-array. Consequently, the light exhibited by that pixel of the optical device will be in the proportions as defined by the template pixel such that the desired uniform colour is displayed.

As has been outlined above, preferably, the array of microstructures further comprises a third sub-array corresponding to a respective third colour channel, the third sub-array covering an area within a pixel corresponding to the proportion of the third colour channel within the pixel such that the pixel exhibits the uniform colour, wherein; the microstructures of the third sub-array are configured to modify the angle of light incident to, and reflected from, the colour shifting layer in a third manner different to the first and second manners such that, at a substantially normal viewing angle of the optical device, the third sub-array exhibits said base colour and at said first viewing angle, the third sub-array exhibits a third colour different from the first and second colours. Preferably, the first, second and third sub-arrays correspond to red, green and blue channels respectively, and as such each template pixel comprises three colour channels corresponding to red, green and blue respectively.

The arrangement of the colour zones in each template pixel could take any desirable form, so long as it corresponds to the proportions of the colour channels to be exhibited. In preferred implementations, each template pixel is divided into two equal sectors, one for each of the colour channels, and the colour zones of each template pixel are arranged in the one or more sectors with the relative proportions thereof being based on the corresponding pixel of the source image. Within each sector (colour channel) of a pixel, the proportion filled by the colour zone could be anywhere between 0% and 100% inclusive, depending on the desired colour.

Preferably, the arrangement of the colour zones is chosen for ease of arrangement of the microstructures. For example, if linear microprisms (having a rectangular footprint) are being used, then the colour zones (and sectors corresponding to the colour channels) will typically have a rectangular geometry.

The template pixels can be created in a number of different ways. In a first preferred implementation, each template pixel is created by identifying the colour of the respective image pixel of the source colour image and using a look-up table stored in memory to select an arrangement of one or more colour zones which will in combination exhibit the identified colour. Hence, prior to performing the method, the look-up table must be populated with a set of possible colours for the image pixels and a corresponding arrangement of colour zones for each one. In this case there will be a finite number of possible colours stored and so in practice it will be necessary to approximate the identified colour to the closest available colour in the look-up table. This could be done for example by associating each colour in the look-up table with a range of colour values (preferably centred on the stored colour itself) and then selecting which of the stored colours (and hence template arrangements) should be used for any one image pixel by selected the stored colour having a colour range into which the identified colour of the image pixel falls.

In an alternative preferred implementation, each template pixel is created by identifying the colour of the respective image pixel of the source colour image, identifying what relative proportions of the at least two colour channels are required to form the identified colour, and using an algorithm to generate an arrangement of colour zones which will in combination exhibit the identified colour. This approach has the advantage that there is no limit placed on the number of different colours which can be represented in the template image. However, it is also more computationally expensive.

The array of microstructures could be formed using any method which achieves the required resolution. In preferred embodiments, the array of microstructures is formed by embossing, stamping or cast-curing the array of microstructures in the form defined by the template pixels. Thus, the microstructures are selectively applied within regions of the colour zones and not elsewhere. In other embodiments, the array of microstructures may be formed by printing. Suitable printing methods include intaglio printing or screen printing the elements, optionally using reticulation methods such as those described in WO-A-2013/167887. Forming the microstructures by printing may result in their surfaces being somewhat irregular, but good results can still be achieved.

Nonetheless, embossing or cast-curing methods are preferred in order to form the microstructures more precisely, and takes advantage of the fact that no registration is required between the colour shifting layer and the array of microstructures. Embossing typically involves stamping a die carrying the desired surface relief structure (defining the microstructures) in its surface into a material suitable for use as the elements, such as a thermoplastic polymer. Optionally this may be carried out at an increased temperature to promote forming of the material. Cast curing involves applying a curable material, such as a UV curable material, either to a substrate which is then brought into contact with a die carrying the desired surface relief, or directly to such a die which is then brought into contact with a substrate, and at least partially curing the material while it is in contact with the die. The substrate is then separated from the die with the formed material affixed thereto, and optionally cured further if necessary. In preferred embodiments the embossing or cast-cure die may constitute the surface of a roller (or a sheet conforming to the surface of a roller), to enable continuous production of the microstructures.

In other embodiments, the array of microstructures may be provided by providing a surface relief and selectively disabling region(s) of the surface relief in order to form the desired array of microstructures. The surface relief is typically a "uniform" surface relief in the sense that when viewed in a particular viewing angle (viewing orientation and tilt angle), each portion surface relief exhibits the same optical effect. The surface relief may be provided by any available method, preferably embossing or cast-curing as described above, and typically takes the form of a uniform array of microstructures. Disabling the region(s) means rendering them non-functional such that they do not act on incident light in the manner described above. This can be achieved in a number of ways. For instance, in one preferred implementation, the regions of the surface relief that do not correspond to the template pixels (i.e. outside the colour zones) are disabled by applying a material of substantially the same refractive index as that of the microstructures on to the regions of the surface relief outside the colour zones. In other words, these regions are "indexed-out". In another preferred implementation, the regions of the surface relief outside the colour zones are disabled by modifying or obliterating the microstructures, preferably by heating, stamping, laser irradiation or any combination thereof. This may involve reshaping the facets of the microstructures making up the surface relief so that they no longer function as intended, or destroying the microstructures entirely.

The array of microstructures may be formed directly onto the colour shifting layer, or onto a transparent substrate on an opposing side to the colour shifting layer. The array of microstructures may be formed onto a carrier substrate before being transferred to the colour shifting layer. An alternative is to laminate a substrate with the colourshifting layer to a substrate having the microstructures formed thereon.

The microstructures have facet angles such that the colour image is exhibited at the first viewing angle. The fact angles used may be determined by the steps of: (i) identifying the colour shifting layer to be used; (ii) applying microstructures of different facet angles to the identified colour shifting layer and measuring the colours exhibited by each facet angle as a function of viewing angle; (iii) determining the first viewing angle at which the colour image should be exhibited, and (iv) based on step (ii), determining the required facet angles of the microstructures. Typically, step (iv) will involve determining facet angles that in combination with the colour shifting layer exhibit red, green and blue light at the determined first viewing angle.

In embodiments, the method may further comprise the steps of: providing a second array of microstructures so as to cover at least part of the colour shifting layer, whereby the second array of microstructures is formed in accordance with a second predetermined template defining a plurality of pixels of a second colour image to be exhibited by the optical device, each pixel exhibiting a uniform colour, the second array of microstructures comprising at least first and second sub-arrays of microstructures corresponding to first and second colour channels of the second template, each sub-array covering an area within a pixel corresponding to the proportion of the respective colour channel within the pixel such that the pixel exhibits the uniform colour, wherein, for the second array; the microstructures of the first sub-array are configured to modify the angle of light incident to, and reflected from, the colour shifting layer in a first manner such that, at a substantially normal viewing angle of the optical device, the first sub array exhibits a base colour and at a second viewing angle of the optical device, the first sub-array exhibits a first colour, wherein said second viewing angle corresponds to viewing the optical device along a direction that is off the normal of the optical device, said second viewing angle being different to said first viewing angle and; the microstructures of the second sub-array are configured to modify the angle of light incident to, and reflected from, the colour shifting layer in a second manner different to the first such that, at a substantially normal viewing angle of the optical device, the second sub-array exhibits said base colour and at said second viewing angle, the second sub-array exhibits a second colour different from the first colour; such that at a substantially normal viewing angle, the optical device exhibits the base colour, and at said second viewing angle, the optical device exhibits the second colour image.

Such a method provides an optical device that exhibits first and second colour images dependent on the viewing angle of the device, with the associated advantages as set out above. As described above in relation to the first aspect of the invention, the first and second (and optionally at least third) arrays may be interlaced, or may be laterally spaced. Such methods may be adapted to form a device as described in relation to the first aspect of the invention.

The template for the second colour image may be generated prior to performing the steps of the method, or may be generated as described above in relation to the template for the first colour image. Where the first and second images are substantially the same, the template for the second colour image is substantially the same as the template for the first colour image, with the configuration of the microstructures determining the viewing angles at which the first and second colour images are displayed.

Preferably, the manufactured optical device is a security device.

In accordance with a fifth aspect of the invention there is provided a method of manufacturing a security document comprising; manufacturing an optical device as set out in the fourth aspect, wherein the optical device is a security device, and; integrating the security device into a security document, wherein preferably the security document is formed as a banknote, cheque, passport, identity card, certificate of authenticity, fiscal stamp or another document for securing value or personal identity.

The use of "colour mixing" ("colour rendering") - preferably R,G,B colour mixing - advantageously allows the array of microstructures to be manufactured in a straightforward manner as only a limited number of different microstructure configurations need to be provided, preferably corresponding to microstructures that in combination with the colour shifting layer exhibit red, green and blue wavelength light at the first viewing angle. Also disclosed herein are optical devices in which the array of substantially transparent microstructures is arranged such that each microstructure within a pixel is configured to modify the angle of light incident to, and reflected from, the colour shifting layer in the same manner. Typically, each microstructure within a pixel would have the same facet angle corresponding to the desired colour to be exhibited by that pixel. For example, in a pixel assigned to exhibit the colour purple, the microstructures of such a purple pixel would each have a facet angle that directly produces that colour in combination with the colour shifting layer. The brightness (intensity) of such a pixel would be controlled by the percentage coverage of the pixel area by the microstructures. A plurality of such pixels each comprising only microstructures having the same configuration cooperate with each other such that the colour image is exhibited by the optical device at the first viewing angle. The viewing angle at which the colours of the pixels are exhibited may be alternatively or additionally controlled by microstructure orientation and/or refractive index, as described above.

### BRIEF DESCRIPTION OF THE DRAWINGS

Examples of optical devices and their methods of manufacture will now be described in relation to the accompanying drawings, in which:
Figure 1 is a schematic arrangement schematically used to aid understanding of the invention;
Figures 2a and 2b are schematic plan views of a security document comprising an optical device 100 according to the invention;
Figures 3a and 3b are flow diagrams outlining the steps of manufacturing a security device according to the invention;
Figure 4 illustrates an example source image and associated image pixels;
Figure 5 illustrates an example template and associated template pixels that may be used to form a device according to the invention;
Figure 6 schematically illustrates the colour channels of a template pixel;
Figures 7a and 7b schematically illustrate template pixels that may be used to form a device according to the invention;
Figure 8 is a plan view of an array of microstructures of an exemplary device according to the invention;
Figure 9 illustrates a portion of an array of microstructures in greater detail;
Figure 10a and 10b illustrate alternative colour channel arrangements for a template pixel;
Figure 11 schematically illustrates a portion of a look-up table that may be used to form a device according to the invention;
Figure 12 schematically illustrates the optical effect exhibited by an exemplary device according to the invention;
Figure 13 schematically illustrates the optical effect exhibited by a further exemplary device according to the invention;
Figure 14a to 14c schematically illustrate interlacing of microstructure arrays that may be used to form a device according to the invention;
Figure 15 illustrates exemplary microstructures that may be used according to the invention;
Figures 16 to 20 illustrate examples of incorporating an optical device according to the invention into a security document;
Figure 21 schematically illustrates a pixel of further embodiment of the invention, and;
Figures 22 and 23 schematically illustrate further embodiments of the invention.

### DETAILED DESCRIPTION

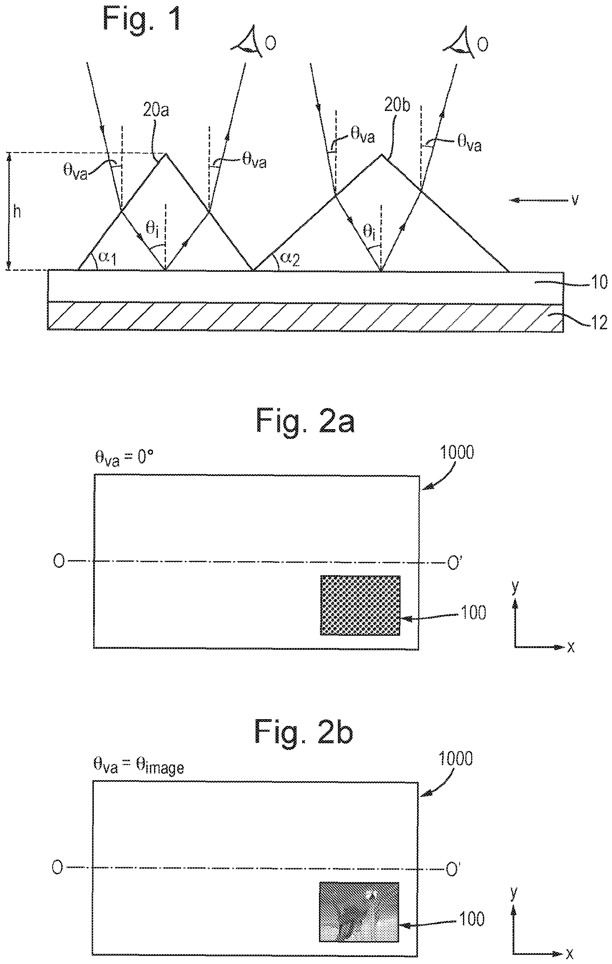

Figure 1 is a schematic diagram of an arrangement that will be used to aid understanding of the invention. The arrangement comprises first 20a and second 20b substantially transparent microstructures positioned on (here in contact with, but generally meaning above and in optical communication with) a colour shifting layer 10. Here, the microstructures 20a, 20b are linear symmetrical triangular microprisms having their long axes extending into the plane of the paper. Figure 1 is a light ray diagram showing the effect of the microprisms 20a, 20b on the angle of incidence of light on a colour shifting layer 10, and the subsequent effect on the optical effect exhibited to an observer O.

Microprism 20a comprises facets arranged at an angle α₁ (facet angle) to the colour shifting layer, and microprism 20b makes a facet angle α₂ with the colour shifting layer 10. The microprisms 20a, 20b have substantially the same height, *h,* which is typically in the range of 1µm to 100µm, preferably 5µm to 40µm. In this example, the colour shifting layer 10 is a partially transparent liquid crystal layer, and as such an absorbing layer 12 is positioned on a distal side of the colour shifting layer with respect to the observer O in order to absorb transmitted light. The absorbing layer is typically black, although other colours may be used. In a case where a colour shifting layer or structure comprises individual layers, (e.g. an absorber layer, dielectric layer and reflective layer), for the purposes of this description, such a structure is referred to as a "colour shifting layer".

As is understood in the art, when light is incident upon a colour shifting layer 10, some of the light is reflected and undergoes Bragg reflection. The wavelength (and hence the colour exhibited to the observer) of the reflected light is dependent on the angle of incidence of light onto the colour shifting layer. In other words, the colour shifting layer exhibits different colours dependent on the angle of incidence.

In the schematic diagram of Figure 1, an observer views the arrangement at a viewing angle θᵥₐ, where θᵥₐ is the angle with respect to the normal of the colour shifting layer (taken as the plane of the arrangement). Light incident on the arrangement corresponding to the viewing angle θᵥₐ (i.e. having an angle of incidence of θᵥₐ) is refracted at the facets of the microprisms 20a, 20b to varying extents dependent on the facet angle α. Consequently, the angle of incidence of light incident on the colour shifting layer (θᵢ) differs dependent on whether the light was initially incident upon microprism 20a or microprism 20b.

More specifically, microprism 20a has a larger facet angle α than microprism 20b, and as a result, for viewing angle θᵥₐ, light incident on microprism 20a undergoes a larger amount of refraction as compared to microprism 20b. As such, a light beam refracted at microprism 20a impinges on the colour shifting layer 10 with a larger angle of incidence θᵢ as compared to light refracted at microprism 20b. Consequently, when the arrangement is viewed at viewing angle θᵥₐ, different colours are exhibited by the regions of the first and second microprisms. In other words, the facet angle of the microstructures can be utilised in order to control the colours exhibited to an observer of the device at a particular viewing angle.

It is noted that in the schematic diagram of Figure 1, the microprisms are substantially symmetrical, which is a particularly preferred arrangement of the microstructures, although this is not essential.

It will also be appreciated that when the viewing angle θᵥₐ of the device 100 changes, the colours exhibited by the device change as the angle of incidence of light on the colour shifting layer will vary. A change in viewing angle θᵥₐ is typically achieved by "tilting" the device 100 with respect to the observer. Here, the optical effects exhibited by the combination of the microprisms and the colour shifting layer are most readily observed when the device is viewed in a direction (orientation) substantially perpendicular to the long axes of the microprisms (here indicated by arrow V), and therefore a change in colour may be observed by tilting the device 100 relative to the observer about an axis substantially parallel with the long axes of the microprisms.

In general, microprisms having a larger facet angle α refract light incident on the arrangement to a greater extent than microprisms having a smaller facet angle α, thereby increasing the angle of incidence θᵢ of the light incident on the colour shifting layer, which gives rise to shorter wavelength light reflected from the colour shifting layer.

Figure 2a is a schematic plan view of a security document 1000 (in this case a banknote) comprising an optical device 100 according to the invention. Here, the optical device takes the form of a security device. Figure 2a illustrates the optical effect exhibited by the device 100 when the banknote 1000 is viewed along a direction substantially parallel to the plane normal of the optical device, i.e. θᵥₐ equals 0°. Such a viewing angle will be referred to hereafter as a "normal viewing angle", or "normal viewing". At this viewing angle, the security device 100 exhibits a substantially uniform colour, which for the purposes of this description is referred to as the "base" colour of the colour shifting layer. Here "uniform" is used to mean that each part of the security device exhibits substantially the same colour.

It will be appreciated that the colour shifting layer 10 will exhibit the same colour for a range of incident angles. At normal viewing of the device 100, although the microprisms covering the colour shifting layer will refract the light to different extents, the subsequent angles of incidence of light on the colour shifting layer are within a range such that the device exhibits the colour that would be exhibited by the colour shifting layer in the absence of microprisms, when viewed normally. This colour is referred to as the base colour. In this particular embodiment, the colour shifting layer 10 is a partially transparent "infra-red to red" colour shifting layer, with a black absorbing layer 12 positioned beneath it (as in Figure 1). Consequently, at substantially normal viewing angle, the colour shifting layer reflects light in the infrared portion of the electromagnetic spectrum (and therefore appears black as the black absorbing layer 12 is visible), and when tilted significantly away (~75°) from a substantially normal viewing angle, exhibits light in the red portion of the electromagnetic spectrum. At the normal viewing angle depicted in Figure 2a, the device 100 therefore appears black to an observer.

The device 100 comprises an array of microprisms having differing facet angles (as will be explained later) arranged on the colour shifting layer. The microprisms are linear microprisms with their primary axes extending along the x direction in the view of Figures 2a and 2b. Therefore, when the viewing angle of the device 100 is changed by rotating ("tilting") the banknote 1000 relative to the observer about an axis O-O' substantially parallel with the long axes of the microprisms, the colours exhibited by the device 100 differ in the regions of microprisms having different facet angles. At least at one viewing angle θᵥₐ = θ_{image} the exhibited colours cooperate with each other to form a colour image as schematically shown in Figure 2b. This effect of "revealing" a colour image on tiling the device 100 provides a surprising and memorable effect for an observer, which improves the ease of checking authenticity, whilst also increasing the difficulty of counterfeiting. This effect is most readily observed when the device 100 is viewed at an orientation substantially perpendicular to the long axes of the microprisms (as indicated by the arrow labelled V).

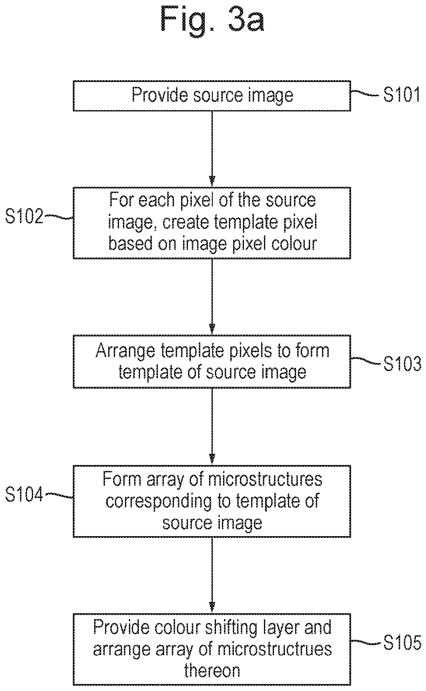

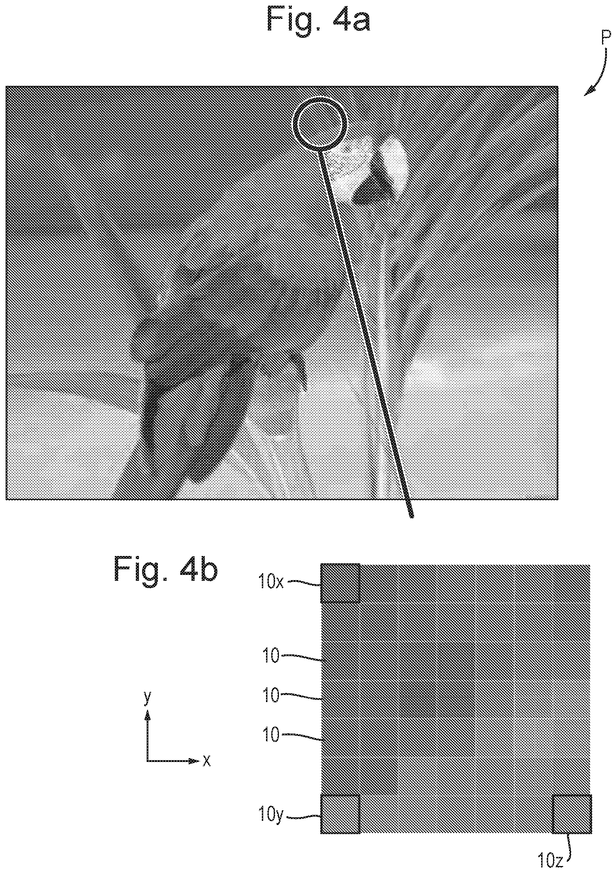

A more detailed explanation of the invention will now be provided with reference to Figures 3a to 9. Figure 3a is a flow diagram setting out selected steps of a preferred method for manufacturing an optical device according to the invention, and Figures 4 to 9 illustrate stages in the method with respect to an exemplary device.

The process begins at step S101 by obtaining a source image which is to be exhibited by the optical device 100 (as shown in Figure 2b). The source image is in the form of a pixelated image with pixels of the desired size. The source image may be provided by converting an original input image accordingly. Therefore, such an original input image could be of any file type such as a bitmap, jpeg, gif or the like, and is a colour image. The pixel size is selected so that, preferably, the individual pixels are not readily disenable to the naked human eye whilst, desirably, keeping the overall number of pixels low so as to keep down the computational demands on the system. For instance, the original input image may be at a higher resolution which is beyond that necessary to create a good visual effect in the final device 100, and so step S101 may optionally involve reducing the resolution of the input image, e.g. by combining groups of original pixels into new single pixels with greater size and applying the average colour of the original pixels to that new pixel for the source image. In preferred cases, the pixelated source image at the end of step S101 will have a pixel size between 50µm and 500µm, preferably between 100µm and 300µm, and more preferably between 50µm and 150µm. For instance, in a particularly preferred example, a pixel size of 264x264 microns was adopted and found to produce good results. Of course, the pixel size may be chosen dependent on the application. For example, if the security device is to be incorporated on or within a security thread for a banknote (typically having a width of ~4mm), smaller pixel sizes may be chosen to ensure good resolution of the exhibited image.

Figure 4a is an example of a source image P that may be used in the present invention. As shown in Figure 4b, which is an enlarged view of a section of the image P, the image P is made up of a plurality of image pixels 10, optionally generated via a conversion process as described above, each of which is the same size and shape as one another and exhibits a single uniform colour. Three exemplary pixels 10x, 10y and 10z are highlighted. Pixel 10x has a uniform blue colour, pixel 10z has a uniform red colour and pixel 10y is a uniform pink-brown colour.

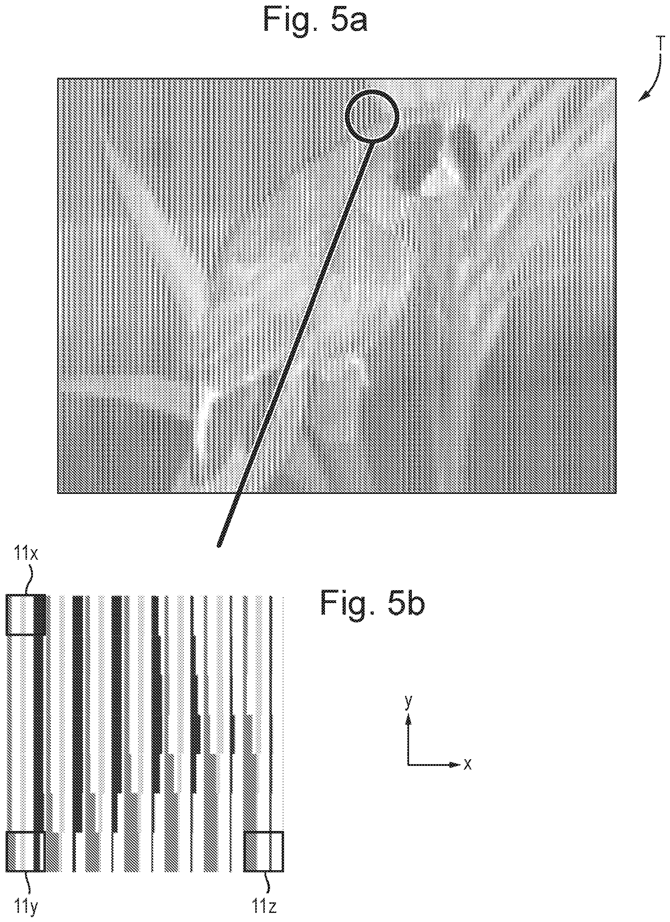

At step S102, for each image pixel 10 of the source image P, a corresponding template pixel 11 is created, based on the colour of the corresponding image pixel 10 in the source image P. Figure 5b illustrates a plurality of template pixels corresponding to the image pixels of Figure 4(b), with template pixels 11x, 11y and 11z - corresponding to image pixels 10x, 10y and 10z respectively - highlighted. Figure 5a illustrates the template pixels arranged to form a template T of the source image (step S103).

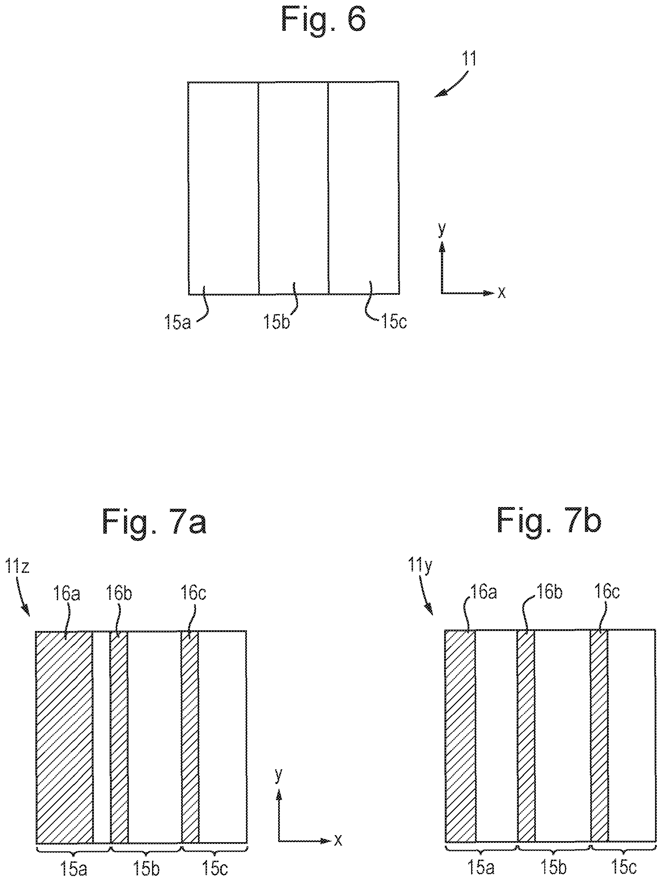

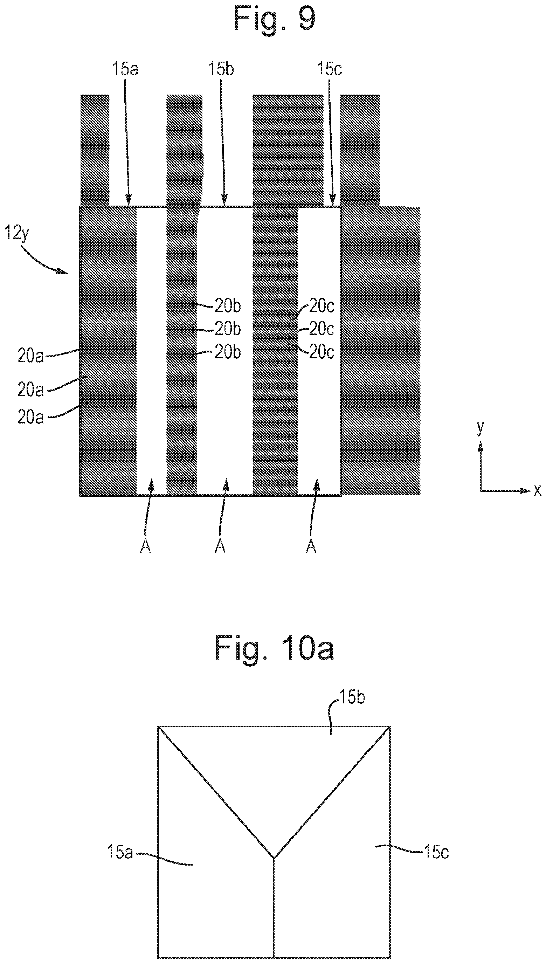

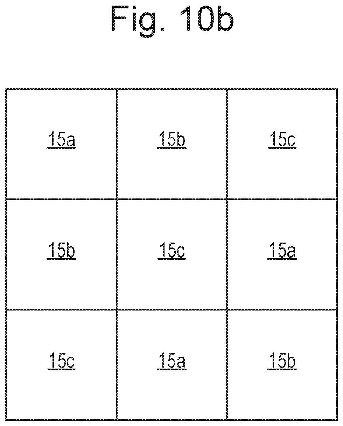

The template pixels 11 are each divided into red (15a), green (15b) and blue (15c) sectors of equal area, as seen in Figure 6. These sectors are the colour channels for the image. In this exemplary embodiment, each sector (colour channel) is an elongate linear strip of equal width, although other geometries of colour channel arrangement are envisaged, as shown for example in Figures 10a and 10b.

Each template pixel 11 defines the proportion of each colour channel that should be exhibited by that pixel such that when the optical device 100 is viewed by an observer at viewing angle θ_{image}, the pixel 11 appears in the desired uniform colour corresponding to the source image. For each colour channel, a template pixel 11 comprises a colour zone that defines the proportion of the colour channel within that pixel that should be exhibited in order that the pixel exhibits the desired uniform colour. In other words, each template pixel 11 comprises a red colour zone 16a covering a percentage of the red colour channel 15a, a green colour zone 16b covering a percentage of the green colour channel 15b, and a blue colour zone 16c covering a percentage of the blue colour channel 15c. The percentage coverage of a colour channel provided by a colour zone may range between 0% and 100% inclusive (e.g. if no blue colour is to be displayed by the pixel, the blue colour zone is not present). For example, referring to Figure 10b, if the pixel is desired to display a uniform green colour, the green sectors 15b would have a 100% coverage by a colour zone, and the red and blue sectors 15a, 15c would have 0% coverage. In arrangements of the type seen in Figure 10b, a template pixel 11 may have more than nine colour sectors, with the percentage coverage of each colour sector preferably being either 0% or 100%.

For example, template pixel 11z (corresponding to image pixel 10z) comprises a red colour zone 16a that substantially fills the red colour channel 15a, with the green 16b and blue 16c colour zones covering minimal areas of their respective colour channels 15b, 15c, as seen in Figure 7a. In contrast, template pixel 11y (corresponding to the pink-brown original pixel 10y) has a more equal portion of red, green and blue such that the colour zones cover more equal percentages of their respective colour channels, as seen in Figure 7b.

It is to be noted that in the presently described example, the colour zones are in the form of elongate strips having the same dimension of the pixel in the y direction, with the respective areas of the colour channels varying due to a variation in the width (i.e. dimension along the x axis) of each colour zone. However, other geometries of colour zone such that the required areas of the colour channels are covered are envisaged - for example a variation in the dimension of the colour zone along the y axis. In general, the colour zones may take any geometry such that the requisite areas of the colour channels are covered.

At step S103, the template pixels 11 are arranged in accordance with the relative positions of the original image pixels 10 from which each derives, to form the template T (see Figure 5a) corresponding to the source image P. Each template pixel 11 is placed in the position of the original image pixel 10 from which it was generated, resulting in an array of red, green and blue colour zones having widths (here along the x axis) corresponding to the amounts of that colour to be exhibited within the pixels. This array of colour zones is clearly seen in Figure 5b. The red colour zones of the plurality of template pixels form a first sub-array; the green colour zones of the template pixels form a second sub-array and the blue colour channels can form a third sub-array of the overall array of colour zones.

In this example, the colour channels are elongate in the y direction and repeat periodically in the x direction, i.e. RGBRGBRGB... along the x axis. It is the "width" (i.e. dimension in the x direction) of each colour zone that determines the relative proportion (intensity) of that colour to be exhibited at that part of the device.

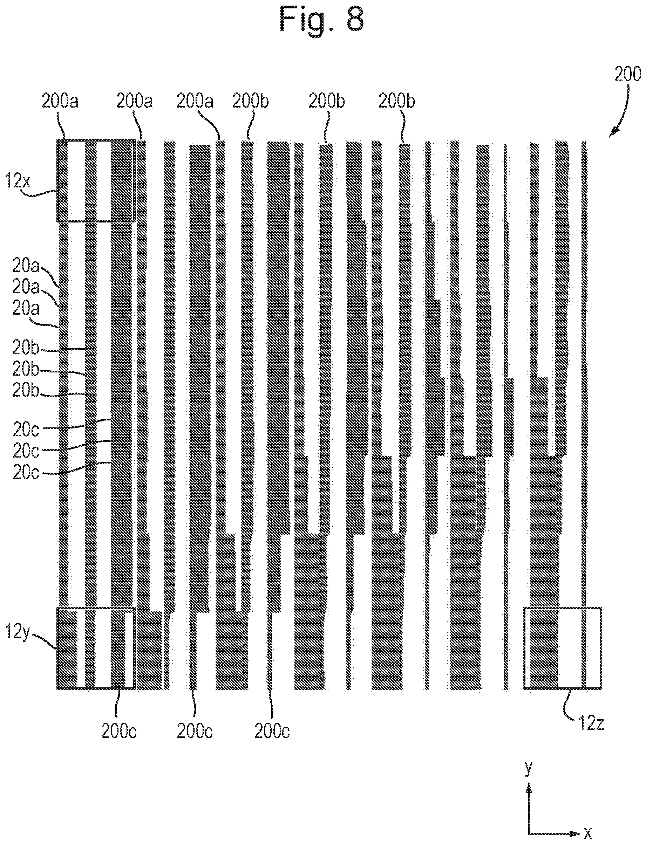

Next, in step S104, an array 200 of microstructures is formed based on the generated template T. The array 200 of microstructures corresponding to the template portion of Figure 5b is shown in Figure 8, and comprises a plurality of microstructures arranged in accordance with the colour zones of Figure 5b. Here, each microstructure is a symmetrical triangular linear microprism 20 having its primary axis arranged along the x axis. As a result, the optical effects of the array 200 are predominantly observable when the device is viewed along a direction parallel to the primary axis (i.e. along the y axis in the illustration of Figure 7). The portion of the array 200 corresponding to a template pixel may be referred to as an "array pixel" 12.

The array 200 comprises microprisms 20a having a facet angle configured to exhibit red wavelength light when the device is viewed at a viewing angle θ_{image} ("red" microprisms); microprisms 20b having a facet angle configured such that green light is exhibited at viewing angle θ_{image} ("green" microprisms); and microprisms 20c having a facet angle that is configured to exhibit blue wavelength light at the same viewing angle of θ_{image} ("blue" microprisms). For the avoidance of doubt, the "red", "green" and "blue" microprisms are each substantially transparent and colourless, with their colour labelling used here for ease of description.

The "red" microprisms 20a are formed in accordance with the red colour zones of the template pixels to form a first sub-array 200a comprising the "red" microprisms. In a similar manner, the "green" microprisms are arranged in accordance with the green colour zones of the template pixels to form a second sub-array 200b, and the "blue" microprisms are arranged in accordance with the blue colour zones of the template pixels in order to form third sub-array 200c. Each microprism of the array is orientated along the width of the colour zones (i.e. primary axes of the microprisms are parallel with the x-axis), and the microprisms within each colour zone are arranged substantially abutting one another along the direction of the y-axis. In this manner, the area of the array 200 covered by "red" microprisms corresponds to the area of the red colour zones of the template pixels; the area of each array pixel 12 covered by "green" microprisms corresponds to the area of the green colour zones of the template pixels and the area of each array pixel 12 covered by the "blue" microprisms corresponds to the area of the blue colour zones of the template pixels.

Consequently, the proportion of "red", "green" and "blue" microprisms in each pixel 12 of the microprism array 200 corresponds to the relative amounts of red, green and blue to be displayed by that pixel of the device 100 in order to exhibit the uniform colour for that pixel of the source image. Take, for example, pixel 12y of the microprism array (which corresponds to image pixel 10y and template pixel 11y), and is shown more detail in Figure 9. The red 15a, green 15b and blue 15c colour channels for the pixel are schematically shown in Figure 9, together with the "red", "green" and "blue" microprisms 20a, 20b, 20c. As can be seen, the microprisms have differing dimensions along the x axis corresponding to the width of the corresponding colour zones of the corresponding template pixel 11y (see Figure 7b). As can also be seen from Figure 9, the pixel comprises more than three microprisms corresponding to each colour channel. This provides a large amount of facet area corresponding to each colour channel within that pixel such that the device exhibits a good colour representation of the source image.

In this example, the "red" microprism sub-array has a pitch (along the y-axis) of 40µm; the "green" microprism sub-array has a pitch of 30µm and the "blue" microprism sub-array has a pitch of 20µm. As the microprisms of each sub-array abut one another along the y-axis, the pitch of a sub-array corresponds to the width of a microprism. Each microprism has the same height (8µm in this example). The colour image is exhibited when the device is tilted between approximately 30° and 60° away from the normal (i.e. at viewing angle θ_{image} of between 30° and 60°), dependent on where the incident light originates.

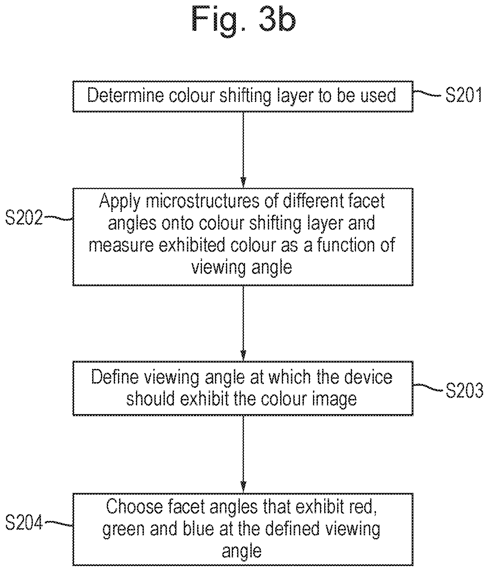

Figure 3b sets out the steps of an example embodiment for determining the facet angles of the "red", "green" and "blue" microprisms such that the device exhibits the colour image at the desired tilt angle. As will be appreciated, the facet angle of the microprisms determines the pitch of the microprisms in an array.

At step S201, the colour shifting layer to be used is determined. A number of different types of colour shifting materials and structures may be used, as have been outlined herein. Preferably, in isolation the colour shifting layer exhibits an infra-red to red, or an infra-red to infra-red wavelength shift upon tilting, such that when viewing the device substantially along its normal, the device appears a uniform black colour. In the case of a colour shifting layer that exhibits an IR-IR wavelength shift, the applied microstructures refract the light incident upon the device such that the light that is ultimately reflected from the colour shifting layer and exhibited by the device is in the visible part of the electromagnetic spectrum.

At step S202, microstructures of differing facet angles are applied to the colour shifting layer, and the exhibited colours (i.e. wavelengths) for each facet angle are measured as a function of viewing angle (tilt angle). For example, arrays of symmetrical linear microprisms having facet angles of between 25 degrees and 70 degrees at 5 degree intervals may be applied to the colour shifting layer and the exhibited colours as a function of viewing angle measured for facet angle.

At step S203, the tilt angle at which the device should exhibit the colour image is determined. Typically, this may be between 30 degrees and 60 degrees away from the normal of the device.

At step S204, based on the data obtained in step S203, the facet angles that exhibited red, green and blue colours at the desired viewing angle are chosen. The array of microstructures may then be formed based on the chosen facet angles that will provide for R,G,B colour mixing. For example, in this embodiment, linear microprisms having the required facet angles are formed in accordance with the colour zones of the template pixels.

In this example, the microprisms of the array 200 are arranged to cover the area of the respective colour zones by orientating each microprism such that its primary axis extends along the "width" of the colour zones (i.e. along the x axis). In this way, the final device 100 is intended to be viewed primarily along the direction of the y axis, i.e. substantially perpendicular to the direction of the primary axes of the microprisms. In other words, the viewing angle lies within a viewing plane that intersects the plane of the device along the y axis. However, it will be appreciated that the microprisms of the array 200 may be arranged in alternative configurations in order to fill the corresponding colour zones of the template pixels. For example, it is envisaged that the microprisms could be orientated with their primary axes extending along the length of the colour zones (i.e. along the y axis); in which case the device would be intended to be viewed primarily along the x axis.

In the current example, each colour channel 15a, 15b, 15c of the template pixels is arranged as an elongate linear strip, which advantageously makes arrangement of the colour zones and subsequent microprism array fabrication easier. However, other colour channel arrangements are envisaged with each colour channel having the same area within a pixel, for example as seen in Figures 10a and 10b.

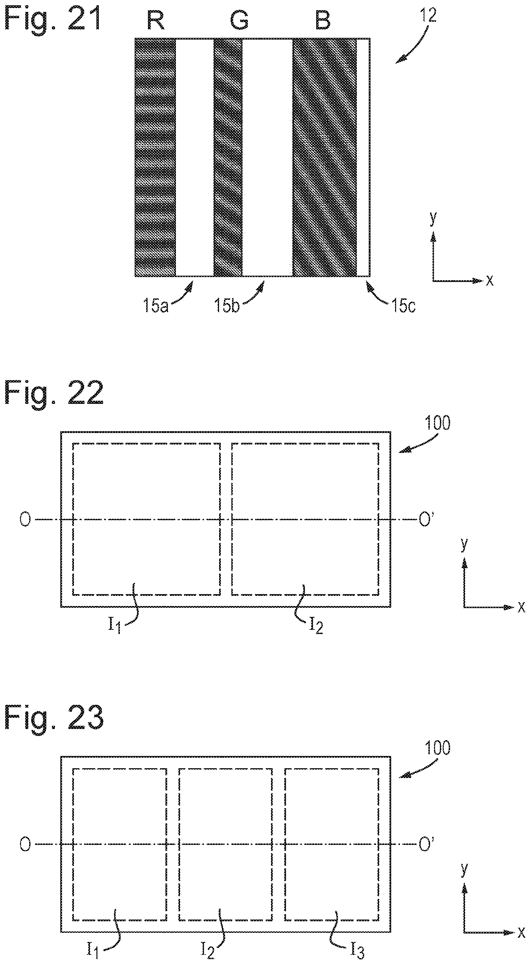

In the present example, each microprism of the array has the same orientation within the plane of the device, and the different colours exhibited by the "red", "green" and "blue" microprisms are due to the differences in facet angles causing differing amounts of refraction. Figure 21 schematically shows a pixel 12 of an alternative embodiment, where the different amounts of refraction are provided due to differences in orientation of the "red", "green" and "blue" microprisms in the respective sub-arrays, with each microprism having the same facet angle. In the view of Figure 21, the device is intended to be viewed along a direction parallel with the y-axis.

At step S105 a colour shifting layer is provided and the array of microstructures is provided on the colour shifting layer in order to form the device. As has been explained earlier, a particular advantage of the present invention is the fact that the array of microstructures does not have to be registered with the colour shifting layer. Examples of such a colour shifting layer include photonic crystals, liquid crystals, interference pigments, pearlescent pigments, structured interference materials or thin film interference structures including Bragg stacks and Fabry-Perot stacks. In this example, the colour shifting layer is a partially transparent IR-red colour shifting layer used in combination with a black absorbing layer. As the device is to be viewed in reflection in other examples a substantially opaque colour shifting layer such as a printed ink comprising an optically variable pigment may be used.

Referring back now to Figure 9, each colour channel has an area (shown generally at "A") that is not covered by microprisms, and exhibits the optical effect displayed by the colour shifting layer in isolation. Here, the colour shifting layer is an "IR-red" colour shifting layer. The "red", "green" and "blue" microprisms are configured to exhibit their respective colours at a viewing angle θ_{image} where the colour shifting layer in isolation reflects light in the infra-red range of the electromagnetic spectrum and therefore appears black in combination with a black absorbing layer 12. Therefore, at θ_{image}, the uncovered areas A of the array pixels 13 appear black and do not contribute to the overall colour exhibited by that pixel. In this example, θ_{image} is between 30° and 60°, with the shift from infra-red to red light reflected by the colour shifting layer occurring at a greater angle of tilt of approximately 75°.

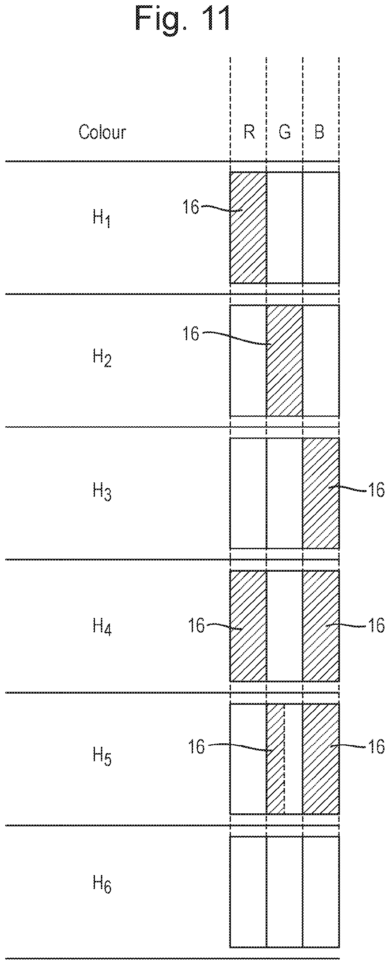

Referring back to Figure 3a, in step S102, the arrangement of the colour zones for each pixel can be generated in various different ways. One preferred implementation is to use a look-up table which stores in memory a template pixel for a variety of colours. Figure 11 schematically illustrates a portion of such a look-up table, which in this case provides template pixel arrangements for six exemplary colours H1 to H6 using red, green and blue colour channels arranged as elongate linear strips as have been discussed above. Each colour H1 to H6 may be defined in the memory by a range of colour values, e.g. in CIELab colour space or the like.

In this example, colour H1 is red, and so the stored template pixel arrangement includes a single colour zone 16 that covers the entirety of the red colour channel, with the green and blue colour channels uncovered by colour zones. Similarly, colour H2 is green and the stored template pixel arrangement comprises a single colour zone covering the entirety of the green colour channel. Colour H3 is blue and the stored pixel arrangement comprises a single colour zone covering the entirety of the blue colour channel.

Colour H4 is purple, and in order to achieve this colour, contributions from the red and blue colour channels are required. Consequently, the template pixel arrangement for colour H4 includes a colour zone covering the entirety of the red colour channel, and a colour zone covering the entirety of the blue colour channel such that equal amounts of red and blue light are exhibited by that pixel.

Colour H5 is turquoise and requires a 2:1 ratio of blue to green light to be exhibited by the pixel in order for the human eye to perceive the correct colour. Consequently, the template pixel arrangement for colour H5 comprises a colour zone covering the entirety of the blue colour channel, and a colour zone covering half of the green colour channel. Colour H6 is black, and as such the template pixel arrangement comprises no colour zones such that in the final device, such a "black" pixel comprises a region with no microstructures. Such a pixel appears black as the black absorbing layer is visible through the colour shifting layer at a viewing angle of θ_{image}.

The use of such a look-up table has the benefit that it is computationally efficient, but the drawback that only a finite number of colours will be represented in the table. Whilst the colour value ranges associated with each of the colours can be arranged to encompass the full colour spectrum such that every input colour can be captured and a suitable template pixel generated, this may reduce the number of different colours in the image exhibited by the device as compared with the original image.

To avoid this, in an alternative implementation, rather than use a look-up table, step S102 may involve the use of an algorithm for generating a template for each source image pixel directly from the detected colour. For instance, the algorithm may involve determining the proportion of each of the available colour channels (e.g. RGB) that are required to recreate the detected colour, and then selecting appropriate colour zones such that the necessary relative proportions of the colour channels are exhibited. In this way there is no limitation on the number of colours, but the process is more computationally expensive.

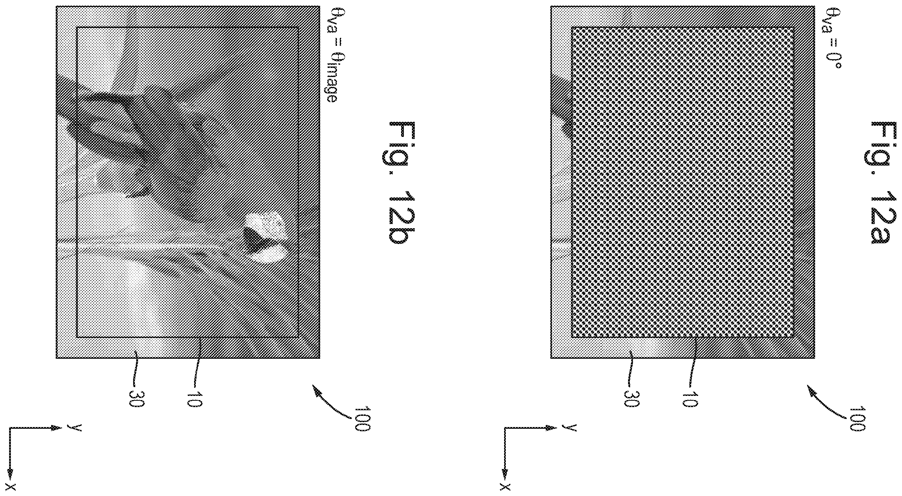

Figures 12a and 12b schematically illustrate an example device 100 where the image revealed at a viewing angle of θ_{image} is part of a larger image displayed by the device 100. Figure 12a illustrates such a device 100, where a part of the larger "complete" image is visible, in this example in the form of a "border" 30. This part of the image is visible at all viewing angles and may be provided by printing, for example. The device 100 also comprises an IR-red colour shifting layer 10 positioned within the border and array of microprisms (not shown) in the manner as described above. In this example, the primary axes of the microprisms are orientated along the x axis.

At a substantially normal viewing angle θᵥₐ = 0°, the colour shifting layer and array of microprisms appear black. The device therefore appears as illustrated in Figure 12a, as a coloured border surrounding a black region. If the device 100 is viewed along a direction parallel to the y axis and tilted such that it is subsequently viewed at a viewing angle θ_{image}, the region of the device that appeared black at normal incidence viewing exhibits a colour image portion such that the device exhibits the complete image. This is schematically shown in Figure 12b, where the border 30 and region of colour shifting layer 10 are illustrated.

As has been explained above, in order to reveal the colour image, the device 100 is designed to be tilted, relative to the observer O, about an axis substantially parallel with the primary axes of the microstructures. In a further embodiment which will now be described, the device may comprise a further array of microstructures interlaced with, and orientated in a different direction to, the first array of microstructures. Therefore, when observed at different viewing orientations, the device exhibits different colour images, creating an aesthetically pleasing effect that is easy to authenticate and yet difficult to counterfeit.

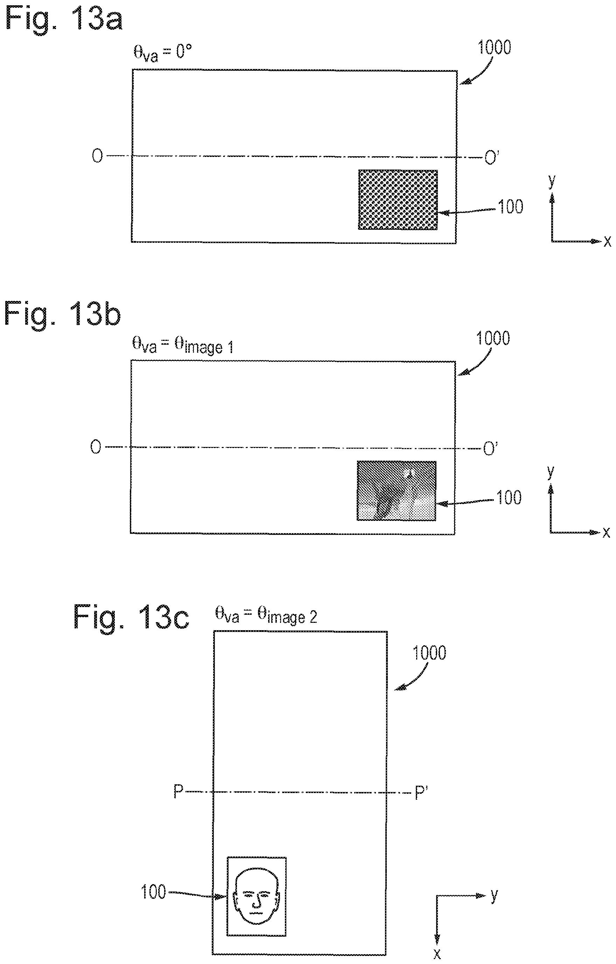

This effect is schematically illustrated in Figures 13a-c. Figures 13a-c illustrate an example security document, here in the form of a banknote 1000, comprising an optical device 100, here acting as a security device. As seen in Figure 13a, at a substantially normal angle of viewing, the security device 100 exhibits the base colour of the colour shifting layer, which in this case is black due to the use of an IR-red colour shifting layer. The device 100 comprises first and second arrays of linear microprisms, with the microprisms of the first array being orientated such that their primary axes are parallel with the x axis, and the microprisms of the second array are orientated such that their primary axes are parallel with the y axis. In other words, the primary axes of the microprisms of the first array are substantially perpendicular to the primary axes of the microprisms of the second array (although other relative angles of orientation are envisaged). The first array of microprisms are arranged in accordance with a plurality of pixels of a first colour image, and the second array of microprisms are arranged in accordance with a plurality of pixels of a second colour image, in the manner as has been described above.

Therefore, when the device 100 is viewed at a first viewing angle θ_{image1} (defined by a direction of viewing perpendicular to the primary axes of the microprisms of the first array (i.e. viewed along a direction parallel to the y-axis), and a particular angle of tilta about O-O'), the device 100 exhibits the first image, as illustrated in Figure 13b.

When the device 100 is viewed at a second viewing angle θ_{image2} (defined by a direction of viewing perpendicular to the primary axes of the second array (i.e. viewed along a direction parallel to the x-axis), and a particular angle of tilt about P-P'), the device 100 exhibits the second image, as illustrated in Figure 13c.

The direction of viewing (viewing orientation) may be varied by rotating the banknote about its normal axis.

In this example, both of the first and second colour images are RGB images, and the "red" microprisms of the first and second arrays have the same facet angle. Similarly, the "blue" microprisms of the first and second arrays have the same facet angle, and the "green" microprisms of the first and second arrays have the same facet angle. Consequently, the respective tilt angles about the axes O-O' and P-P' of viewing angles θ_{image1} and θ_{image2} are the same. However, it is envisaged that the microprisms of the first and second arrays may differ, with the first and second images in such a differing arrangement being exhibited at different tilt angles as well as at different viewing orientations (directions).

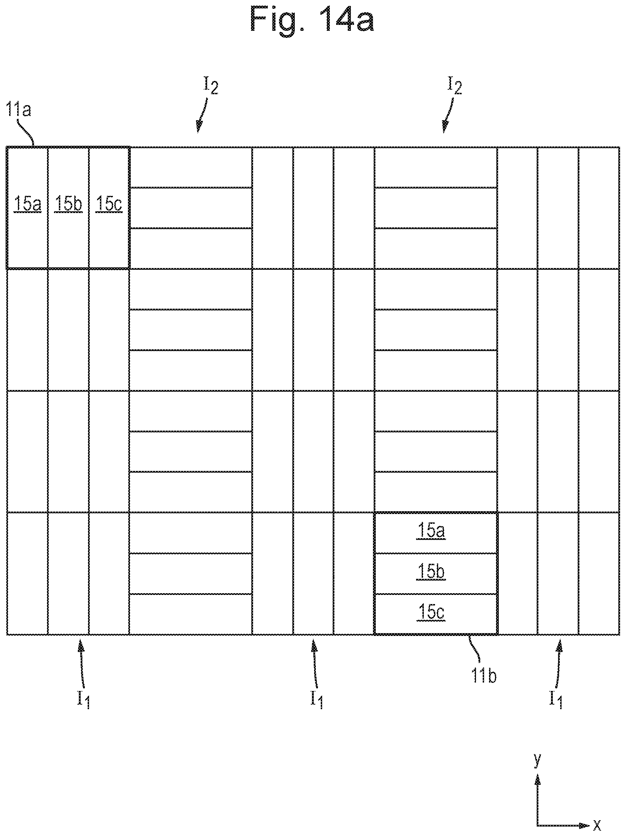

Figures 14a to 14c will now schematically illustrate how the first and second microprism arrays (corresponding to the first and second colour images) may be interlaced. For ease and clarity of description, a plurality of template pixels 11 are shown for the device 100, from which the arrays of microprisms may be arranged, as has been explained above. The colour zones have also been omitted from Figure 14a for clarity purposes, with only the colour channels 15a, 15b, 15c for each template pixel shown.

Each of the first and second source images is divided into a plurality of image segments that together cooperate to form the respective image. In the example of Figure 14a the image segments are image strips that are elongate linear strips extending along the y axis, although other geometries are envisaged. As can be seen in Figure 14a, the image strips I₁ of the first image are interlaced with the image strips I₂ of the second image, with the image strips I₁ and I₂ alternating along the x axis (i.e. along a direction perpendicular to their orientation). Due to the interlacing of the two images, each template pixel of each image is halved in size along the direction of interlacing (i.e. here along the x axis) as compared to the case where the device exhibits a single image.

In the example of Figure 14a, each image strip I₁, I₂ is one pixel in width, although the image strips may be two or more pixels wide. Preferably, each image strip has a dimension (e.g. in Figure 14a a "width" along the x axis) smaller than is perceptible by the naked human eye such that each image strip is not discernible to the naked human eye.

Each image strip I₁ of the first image comprises a plurality of template pixels 11 (corresponding to respective image pixels 10 of the original first image) having their colour channels arranged as elongate linear strips extending along the y axis. For each template pixel of the first image the respective colour zones are provided according to the desired colour of that pixel, and the microprisms of the first array are formed in accordance with the colour zones, as has been described above. In other words, the microprisms formed in accordance with the colour zones of the image strips I₁ of the first image form the first array.

The microprisms of the first array are orientated with their primary axes extending along the "width" of the colour channels of the first image strips I₁ (i.e. along the x axis in this example). The colour channels 15a, 15b and 15c are shown for exemplary first image template pixel 11a.

Each image strip I₂ of the second image comprises a plurality of template pixels 11 (corresponding to image pixels 10 of the original second image) having their colour channels arranged as elongate linear strips extending along the x axis, i.e. perpendicular to the colour channels of the first image. For each template pixel of the second image the respective colour zones are provided according to the desired colour of that pixel, and the microprisms of the second array are orientated with their primary axes extending along the "width" of the colour channels of the second image strips I₂ (i.e. along the y axis in this example). The colour channels 15a, 15b, 15c are shown for exemplary second image template pixel 11b.

Although the image strips I₁, I₂ in this example are elongate strips that are interlaced along the x axis, other arrangements of interlacing are envisaged. For example, the first and second images may be divided into image strips that extend along the x axis, with the direction of interlacing being along the y axis.

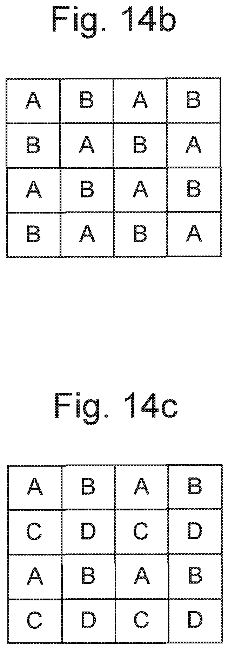

In the example of Figure 14a, the image segments are in the form of elongate image strips that have been interlaced along one direction (perpendicular to the direction of elongation of the image strips). In other embodiments, the image segments may be arranged in the form of a grid pattern giving rise to two dimensional interlacing. Such arrangements are illustrated in Figures 14b and 14c, which schematically show arrangements of the arrays of microstructures that may be used in embodiments of the invention. In Figure 14b, image segments defining two images (labelled "A" and "B" for simplicity) have substantially square geometry and are arranged in a grid pattern such that they are interlaced in two dimensions. Figure 14c schematically illustrates an arrangement of four arrays of microstructures of a device that exhibits four different images (labelled "A", "B", "C" and "D"), where the image segments are arranged in a grid pattern and the interlacing is in two dimensions.

It is envisaged that three or more images (i.e. three or more arrays of microstructures) may be interlaced in either a one dimensional or two dimensional a manner as described above. It will be appreciated that due to the pixel size restrictions due to the interlacing, the colour saturation of the final images exhibited by the device 100 will be reduced as compared to a device exhibiting a single image. For example, a device exhibiting two interlaced images will have a colour saturation reduction of 50% as compared to a single image device.

Figure 22 schematically illustrates a further embodiment of a device 100 according to the present invention. Here, the device 100 comprises first and second arrays of microstructures. However, rather than the first and second arrays being interlaced as described above, in this embodiment the first array and second arrays are laterally spaced apart. The first array of microstructures exhibits a first colour image and is schematically represented at I₁. The second array of microstructures exhibits a second colour image and is schematically illustrated at I₂, with I₂ being laterally spaced from I₁. The first and second arrays may be laterally spaced such that there is a gap between them, as in Figure 22, or may substantially abut each other such that there is no gap between them. As in the previously described embodiments, the microstructures of both arrays are elongate linear microprisms, here with the direction of elongation being along the x-axis. The microprisms of the first and second arrays have the same orientation within the plane of the device. Hence, the device is intended to be viewed in a viewing plane that intersects the device along a direction parallel with the y-axis.

In this embodiment, the arrangement of the microstructures within each array is substantially the same. In other words, the microstructures of the first array are arranged in accordance with a plurality of pixels of a source colour image, and the microstructures of the second array are arranged in accordance with the same plurality of pixels of the same source colour image. However, the corresponding microstructures of the arrays have different facet angles such that they exhibit their respective colours (in combination with the colour shifting layer) at different viewing angles (here different angles of tilt about O-O'). For example, the "red", "green" and "blue" microprisms of the first array may have facet angles such that they exhibit their respective colours at a viewing angle of ~40°, whereas the "red", "green" and "blue" microprisms of the second array may have facet angles such that they exhibit their respective colours at a viewing angle of ~60°. As will be appreciated, these viewing angles are exemplary and the facet angles of the microprisms may be varied to provide the respective images at different desired viewing angles.

Thus, at a first viewing angle (here ~40°), the device will exhibit two images in adjacent regions I₁, I₂ corresponding to the first and second arrays. The colour image exhibited by the first array in region I₁ will be a "true colour" version of the source image, i.e. have substantially the same colours as the source image. In contrast, the image exhibited by the second array in region I₂ will be a "false colour" version of the same image (e.g. each pixel colour of the original source image is replaced by another colour). In other words, the pixels of the second array will still exhibit colours due to light being reflected from the colour shifting layer; however, the facet angles of the microprisms of the second array are such that these colours do not define the R,G,B contributions as in the source image.

Similarly, at a second viewing angle (here ~60°), the image exhibited by the second array in region I2 will be a "true colour" version of the original source image, with the image exhibited by the first array in region I1 being a "false colour" version of the original source image.

Such a device exhibiting side-by-side true colour and false colour versions of the same source image in this manner provides a straightforward means of authentication which is simultaneously extremely difficult to counterfeit. In the description of Figure 22 above, the microprisms of the first and second arrays differ through their respective facet angles. In alternative embodiments, the microprisms of the first and second arrays may have the respective same facet angles, but differ in refractive index such that the visual effect of laterally adjacent "true colour" and "false colour" image versions is exhibited.

Figure 23 schematically illustrates a variation on this embodiment, in which the device 100 comprises three laterally spaced arrays of microstructures, labelled at I₁, I₂ and I₃. In a similar manner to the embodiment of Figure 22 described above, the arrangement of the microstructures within each array is substantially the same, and the microprisms of each array have the same orientation within the plane of the device. However, the respective facet angles of the microprisms in each array differ from each other such that, on tilting the device about O-O' (i.e. changing the viewing angle), at a first viewing angle θ1 the first array exhibits a true colour version of the source image in region 11; at a second viewing angle θ2 the second array exhibits a true colour version of the source image in region I2, and at a third viewing angle θ3 the third array exhibits a true colour version of the source image in region I3. Typically θ1 < θ2 < θ3 such that the true colour images appear to move sequentially across the device upon tilting so as to provide a particularly striking visual effect, especially as the perceived direction of movement of the images is perpendicular to the direction of tilting. In other embodiments, the arrays may not exhibit their true colour images in sequential order.

As with the embodiment described in Figure 22, the respective microprisms of the different arrays may differ in refractive index rather than facet angle in order to achieve the same effect.

Of course, in further variations, the images exhibited by the arrays may be different (i.e. a different arrangement of pixels). However, the use of the same image being exhibited in different colour configurations (i.e. true colour or false colour) is particularly difficult to replicate and thus increases the security level of the device.

In both of the above described embodiments of Figures 22 and 23, the device exhibits the base colour (preferably black) at normal viewing.

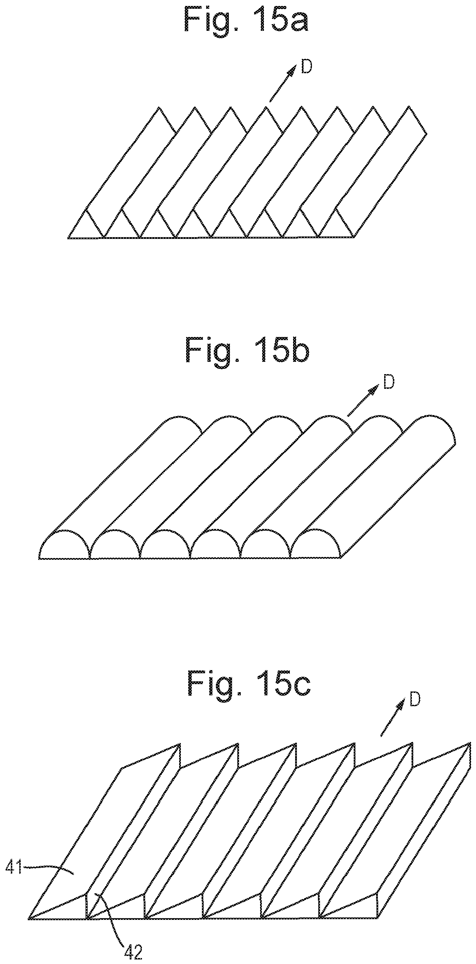

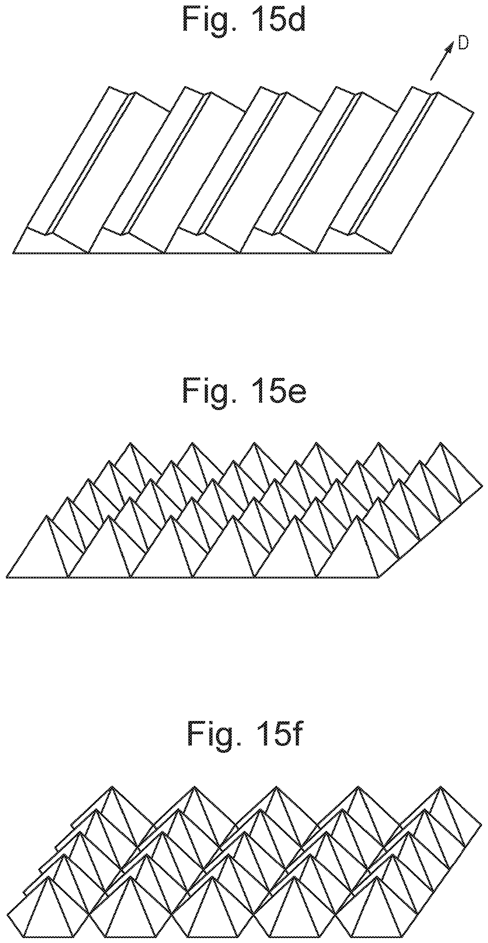

The above figures have been described with reference to the microstructures being microprisms having a symmetrical triangular cross-section. Figure 15a shows a perspective view of a portion of an array of such microstructures. Other microstructure geometries are envisaged however, for example as seen in Figures 15b to 15f. Figure 15c illustrates a portion of an array comprising a plurality of microprisms each having a "saw-tooth" structure, in that one facet (shown here at 41) defines a more acute angle with the colour shifting layer than the opposing facet 42. Multi-faceted microprisms (i.e. having more than two facets) may be used, as in the portion of the array shown in Figure 15d. A lenticular array having a curved surface structure may be used, as illustrated at Figure 15b. In each case, a primary axis of the microstructures, D, has been shown, with the optical effects most strikingly exhibited when viewed at an orientation substantially perpendicular to the primary axes.

The above examples may be seen as "one dimensional" microstructures in that their refractive effects are primarily observed in one rotational viewing direction with respect to an individual microstructure (typically perpendicular to its long axis). However, arrays of "two dimensional" microstructures are also envisaged where the optical effects due to the presence of the microstructures are readily observed at two or more rotational viewing directions, due to such structures having facets along more than one axis that make a facet angle of less than 90°. Examples of such two-dimensional microstructures include square based pyramids as seen in Figure 15e, and hexagonal based pyramids, as illustrated in Figure 15f.

Optical devices of the sort described above, in the form of security devices, can be incorporated into or applied to any article for which an authenticity check is desirable. In particular, such devices may be applied to or incorporated into documents of value such as banknotes, passports, driving licences, cheques, identification cards etc.

The security device or article can be arranged either wholly on the surface of the base substrate of the security document, as in the case of a stripe or patch, or can be visible only partly on the surface of the document substrate, e.g. in the form of a windowed security thread. Security threads are now present in many of the world's currencies as well as vouchers, passports, travellers' cheques and other documents. In many cases the thread is provided in a partially embedded or windowed fashion where the thread appears to weave in and out of the paper and is visible in windows in one or both surfaces of the base substrate. One method for producing paper with so-called windowed threads can be found in EP-A-0059056. EP-A-0860298 and WO-A-03095188 describe different approaches for the embedding of wider partially exposed threads into a paper substrate. Wide threads, typically having a width of 2 to 6mm, are particularly useful as the additional exposed thread surface area allows for better use of optically variable devices, such as that presently disclosed.

The security device or article may be subsequently incorporated into a paper or polymer base substrate so that it is viewable from both sides of the finished security substrate. Methods of incorporating security elements in such a manner are described in EP-A-1141480 and WO-A-03054297. In the method described in EP-A-1141480, one side of the security element is wholly exposed at one surface of the substrate in which it is partially embedded, and partially exposed in windows at the other surface of the substrate.

Base substrates suitable for making security substrates for security documents may be formed from any conventional materials, including paper and polymer. Techniques are known in the art for forming substantially transparent regions in each of these types of substrate. For example, WO-A-8300659 describes a polymer banknote formed from a transparent substrate comprising an opacifying coating on both sides of the substrate. The opacifying coating is omitted in localised regions on both sides of the substrate to form a transparent region. In this case the transparent substrate can be an integral part of the security device or a separate security device can be applied to the transparent substrate of the document. WO-A-0039391 describes a method of making a transparent region in a paper substrate. Other methods for forming transparent regions in paper substrates are described in EP-A-723501, EP-A-724519, WO-A-03054297 and EP-A-1398174.

The security device may also be applied to one side of a paper substrate so that portions are located in an aperture formed in the paper substrate. An example of a method of producing such an aperture can be found in WO-A-03054297. An alternative method of incorporating a security element which is visible in apertures in one side of a paper substrate and wholly exposed on the other side of the paper substrate can be found in WO-A-2000/39391.

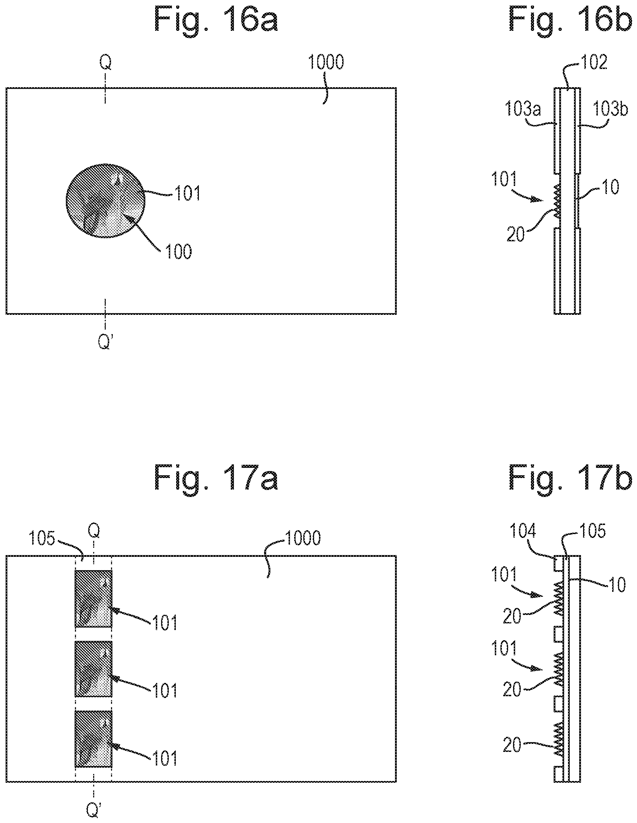

Examples of such documents of value and techniques for incorporating a security device will now be described with reference to Figures 16 to 19.

Figure 16 depicts an exemplary document of value 1000, here in the form of a banknote. Figure 16a shows the banknote in plan view (and at viewing angle θ_{image}) whilst Figure 16b shows the same banknote in cross-section along the line Q-Q'. In this case, the banknote is a polymer (or hybrid polymer/paper) banknote, having a transparent substrate 102. Two opacifying layers 103a and 103b are applied to either side of the transparent substrate 102, which may take the form of opacifying coatings such as white ink, or could be paper layers laminated to the substrate 102.

The opacifying layers 103a and 103b are omitted across an area 101 which forms a window within which the security device 100 is located. As shown best in the cross-section of Figure 16b, the microstructures (shown generally at 20) are provided on one side of the transparent substrate 102, and a colour shifting layer 10 is provided on the opposite surface of the substrate. The microstructures 20 and colour shifting layer 10 are each as described above with respect to any of the disclosed embodiments, such that the device 100 reveals a colour image at a first viewing angle, as schematically shown in Figure 16a. As the device 100 is to be viewed in reflection it is desirable to use a substantially opaque colour shifting layer such as a printed ink comprising an optically variable pigment, although a partially transparent colour shifting layer may be used in conjunction with an absorbing element as described above.

It should be noted that in modifications of this embodiment the window 101 could be a half-window with the opacifying layer 103b continuing across all or part of the window over the security device 100.

Figure 17 shows such an example, although here the banknote 1000 is a conventional paper-based banknote provided with a security article 105 in the form of a security thread, which is inserted during paper-making such that it is partially embedded into the paper so that portions of the paper 104 lie on either side of the thread. This can be done using the techniques described in EP0059056 where paper is not formed in the window regions during the paper making process thus exposing the security thread. The security thread 105 is exposed in window regions 101 of the banknote. Alternatively, the window regions 101 may for example be formed by abrading the surface of the paper in these regions after insertion of the thread. The security device is formed on the thread 105, which comprises the array(s) of transparent microstructures 20 provided on one side and colour shifting layer 10 provided on the other.

If desired, several different security devices 100 could be arranged along the thread, with different or identical images displayed by each. In one example, a first window could contain a first device, and a second window could contain a second device, each having different microstructure arrays, so that the two windows display different images.

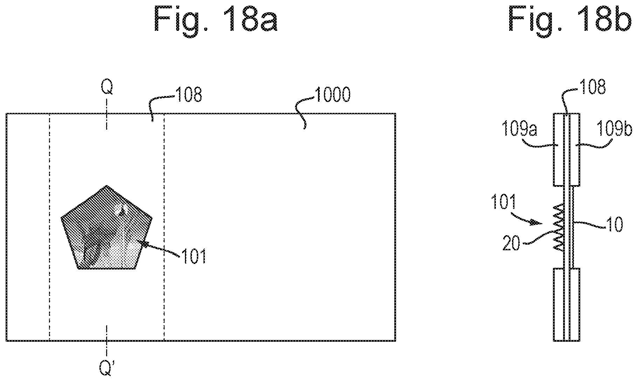

In Figure 18, the banknote 1000 is again a conventional paper-based banknote, provided with a strip element or insert 108. The strip 108 is based on a transparent substrate and is inserted between two plies of paper 109a and 109b. The security device is formed by an array(s) of microstructures 20 disposed on one side of the strip substrate, and a colour shifting layer 10 disposed on the opposing side. The paper plies 109a and 109b are apertured across region 101 to reveal the security device, which in this case may be present across the whole of the strip 108 or could be localised within the aperture region 101.

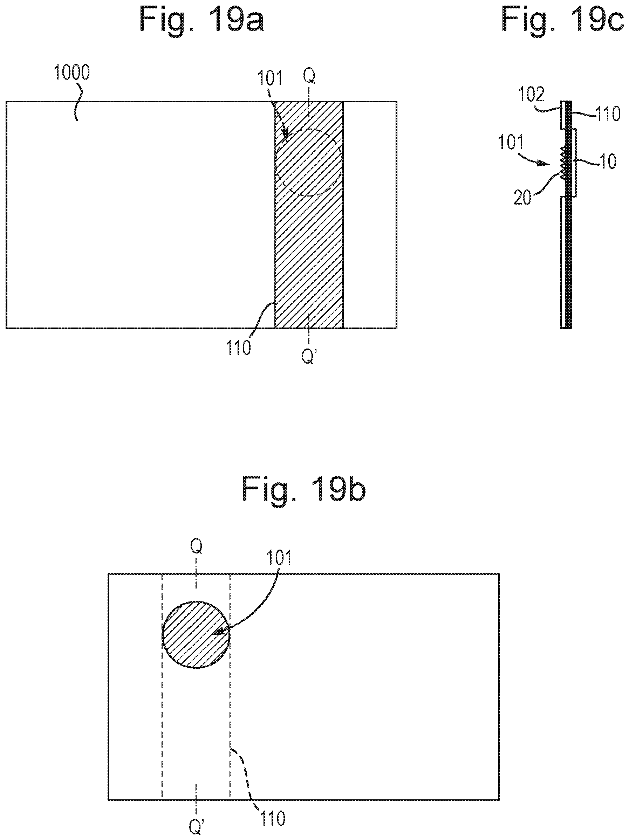

A further embodiment is shown in Figure 19 where Figures 19(a) and (b) show the front and rear sides of the document 1000 respectively, and Figure 19(c) is a cross section along line Q-Q'. Security article 110 is a strip or band comprising a security device according to any of the embodiments described above. The security article 110 is formed into a security document 1000 comprising a fibrous substrate 102, using a method described in EP-A-1141480. The strip is incorporated into the security document such that it is fully exposed on one side of the document (Figure 19(a)) and exposed in one or more windows 101 on the opposite side of the document (Figure 19(b)). Again, the security device is formed on the strip 110, which comprises a transparent substrate with microstructures 20 formed on one surface and colourshifting layer 10 formed on the other.

In Figure 19, the document of value 1000 is again a conventional paper-based banknote and again includes a strip element 110. In this case there is a single ply of paper. Alternatively a similar construction can be achieved by providing paper 102 with an aperture 101 and adhering the strip element 110 on to one side of the paper 102 across the aperture 101. The aperture may be formed during papermaking or after papermaking for example by die-cutting or laser cutting. Again, the security device is formed on the strip 110, which comprises a transparent substrate with the array(s) of microstructures 20 formed on one surface and colour shifting layer 10 formed on the other.

In the examples of Figures 16 to 19, the colour shifting layer and the array(s) of microstructures are described as being on opposing sides of a transparent substrate. However, in other examples they may be provided on the same side of the transparent substrate.

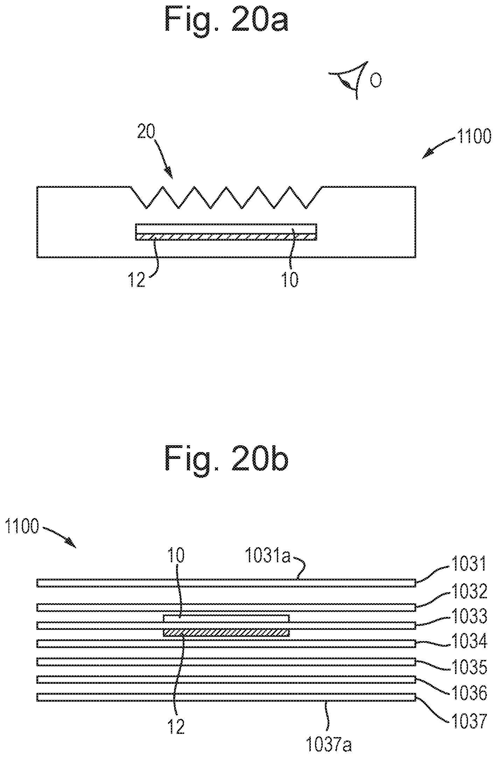

Figures 20a and 20b schematically illustrate how a security device 100 according to the invention may be incorporated into a substrate 1100 for a security document such as a plastic identity card or passport. Figure 20a is a schematic cross-sectional diagram of an example substrate 1100 for a security document. The substrate 1100 comprises a plurality of polymer layers that are joined together, typically be lamination (see Figure 20b). The substrate 1100 has a first outer surface 1031a and a second outer surface 1037a. The thickness of the substrate 1100, which is the distance between the first and second outer surfaces 31a, 37a, is preferably at least approximately 150µm and more preferably at least approximately 300µm. In particular, the substrate 1100 may be between approximately 300µm and 1000µm thick and, for example, may be approximately 800µm thick. The substrate 1100 may be substantially rigid or at least semi-rigid by virtue of its thickness and polymer (typically plastic) composition.

Within the substrate 1100 is a colour shifting layer 10 as described in any of the embodiments above. In this case the colour shifting layer 10 is partially transparent and a dark absorbing layer 12 is therefore utilised as described above. As will be understood, a substantially opaque colour shifting layer may alternatively be used.

An array of microstructures (shown generally at 20) is formed in the first outer surface 31a of the substrate 1100 so that the microstructures are positioned above and in register (i.e. aligned with) with the colour shifting element 10, such that light from the colour shifting element passes through the microstructures 20 before reaching the observer O.

Figure 20b schematically illustrates the structure of such a substrate 1100. As illustrated in Figure 20b, a plurality of typically planar self-supporting polymer layers 1031, 1032, 1033, 1034, 1035, 1036 and 1037 are provided in a (typically fully) overlapping manner. Layers 1031 and 1037 are first and second outer layers respectively, and the outer surface 1031a of the first outer layer defines the first outer surface 1031a of the substrate 1100, and similarly the outer surface 1037a of second outer surface 1037a defines the second outer surface of the substrate 1100. The first and second outer layers are typically substantially transparent.

As can be seen in Figure 20b, a plurality of internal layers 1032, 1033, 1034, 1035 and 1036 are provided positioned between the first and second outer layers 1031, 1037. For the purposes of this description, moving in a direction from the first ("top") outer layer 1031 to the second ("bottom") outer layer 1037, layer 1032 is the first internal layer, layer 1033 is the second internal layer, layer 1034 is the third internal layer, layer 1035 is the fourth internal layer and layer 1036 is the fifth internal layer.

A colour shifting layer 10 is provided on and in contact with a first surface the second internal layer 1033. Here the first surface is the uppermost surface of second internal layer 1033 and is the surface of second internal layer proximal the first outer layer 1031. The colour shifting layer may be provided on the second internal layer 1033 by a variety of methods, such as lamination, printing or sputtering via vacuum deposition which would typically be the case for the different layers of a thin film multilayer interference structure (in the case of optically variable pigments for example). Such a thin film interference structure forms a "colour shifting layer" for the purposes of this description.

For the case where the colour shifting layer is at least partially transparent, an absorbing element 12 is provided on and in contact with the second surface of the second internal layer 1033. Here the second surface is the bottommost surface of the second internal layer 1033 and is the surface of second internal layer distal the first outer layer 1031. In other embodiments the colour shifting layer and absorbing layer 12 may be provided on the same surface of internal layer 1033.

The first outer layer 1031 and the first internal layer 1032 are substantially transparent such that visible light can pass through them. This allows visible light to be incident to and reflected from the colour shifting layer 10 such that the colour shifting layer 10 is visible through the first outer layer 1031 and the first internal layer 1032. The second internal layer 1033 upon which the colour shifting layer 10 is positioned is also substantially transparent. In the case where an absorbing element is not required (for example where the colour shifting layer is substantially opaque, such as metal-dielectric multilayer thin films or a printed optically variable pigment), the second internal layer 1033 may be transparent or opaque. The third 1034, fourth 1035 and fifth 1036 internal layers are substantially opaque. In general the internal layers positioned between the colour shifting layer 10 and the first ("top") outer layer are substantially transparent (or at least have a substantially transparent region) such that the colour shifting layer 10 is visible through the top of the finished substrate and the optical variable effects of the colour shifting element are exhibited to a viewer. Typically the internal layers positioned between the colour shifting layer 10 and the second ("bottom") outer layer are substantially opaque. Furthermore, the substantially opaque internal layers may comprise marking additives such that they can be laser marked, as is known in the art.

Although in general the internal layers positioned between the colour shifting layer 10 and the first ("top") outer layer are substantially transparent, the colour shifting layer 10 may be viewable through a substantially transparent window region in a layer positioned between the colour shifting layer 10 and the first outer layer 1031.

The polymer layers are typically formed from a plastic material such as polycarbonate, polyethylene terephthalate (PET) or polyethylene terephthalate glycol-modified (PETG). Polycarbonate is particularly suitable due to its high durability and ease of manufacture. Each of the layers may be between approximately 30 and 200µm thick. Although in this example seven layers are shown, in other examples a different number of layers may be used.

The microstructure array is formed in at least the first outer layer 1031, and may be formed in the first outer layer 1031 and first internal layer 1032. This is typically performed by embossing, and may be carried out subsequent to lamination of the polymer layers, or substantially simultaneously with the lamination.

In other embodiments, the colour shifting layer may be inserted into a preformed polymer substrate by insertion of a "plug" containing the colour shifting layer into a corresponding aperture in the substrate.

## Claims

1. An optical device (100) comprising;
a colour shifting layer (10) that exhibits different colours dependent on the angle of incidence of incident light, and;
an array (200) of substantially transparent microstructures (20) covering at least a part of the colour shifting layer and configured to modify the angle of light incident to, and reflected from, the colour shifting layer, **characterized in that** said array of microstructures is arranged in accordance with a plurality of pixels of a colour image to be exhibited by the optical device, each pixel exhibiting a uniform colour, wherein;
the array of microstructures comprises at least first and second sub-arrays (200a, 200b) of microstructures corresponding to respective first and second colour channels, each sub-array covering an area within a pixel corresponding to the proportion of the respective colour channel within the pixel such that the pixel exhibits the uniform colour, and further wherein;
the microstructures of the first sub-array (200a) are configured to modify the angle of light incident to, and reflected from, the colour shifting layer in a first manner such that, at a substantially normal viewing angle of the optical device, the first sub array exhibits a base colour and at a first viewing angle of the optical device, the first sub-array exhibits a first colour, wherein said first viewing angle corresponds to viewing the optical device along a direction that is off the normal of the optical device and;
the microstructures of the second sub-array (200b) are configured to modify the angle of light incident to, and reflected from, the colour shifting layer in a second manner different to the first such that, at a substantially normal viewing angle of the optical device, the second sub-array exhibits said base colour and at said first viewing angle, the second sub-array exhibits a second colour different from the first colour;
such that at a substantially normal viewing angle, the optical device exhibits the base colour, and at said first viewing angle, the optical device exhibits the colour image.

2. The optical device of any of claim 1, wherein the array of microstructures further comprises a third sub-array corresponding to a respective third colour channel, the third sub-array covering an area within a pixel corresponding to the proportion of the third colour channel within the pixel such that the pixel exhibits the uniform colour, wherein;
the microstructures of the third sub-array are configured to modify the angle of light incident to, and reflected from, the colour shifting layer in a third manner different to the first and second manners such that, at a substantially normal viewing angle of the optical device, the third sub-array exhibits said base colour and at said first viewing angle, the third sub-array exhibits a third colour different from the first and second colours, preferably wherein the first, second and third sub-arrays correspond to red, green and blue channels respectively.

3. The optical device of claim 1 or claim 2, wherein the microstructures of the sub-arrays are configured to modify the angle of light incident to and reflected from the colour shifting layer in differing manners due to differences in one or more of:
(a) facet angle;
(b) orientation;
(c) refractive index.

4. The optical device of any of the preceding claims, wherein each microstructure comprises at least one planar or curved face which makes a facet angle of more than 0° and less than or equal to 90° with the plane of the colour shifting layer.

5. The optical device of any of the preceding claims, wherein the microstructures of different sub-arrays have different facet angles such that, at the first viewing angle, the sub-arrays exhibit different colours.

6. The optical device of any of the preceding claims, wherein each microstructure has a primary axis orientated in a first direction lying in the plane of the optical device, wherein the microstructures are prisms extending along their primary axis and preferably having a cross-section which is a triangle, a trapezium, an arch, a circular segment or an elliptical segment, or wherein the microstructures are substantially pyramidal.

7. The optical device of any of the preceding claims, wherein each pixel that exhibits a non-zero proportion of a colour channel comprises at least three microstructures of the respective sub-array corresponding to that colour channel, preferably at least five microstructures of the respective sub-array corresponding to that colour channel.

8. The optical device of any of the preceding claims, wherein the coloured image exhibited at the first viewing angle is a part of a larger image exhibited by the optical device.

9. The optical device of any of the preceding claims, further comprising a second array of substantially transparent microstructures covering at least a part of the colour shifting layer and configured to modify the angle of light incident to, and reflected from, the colour shifting layer, and arranged in accordance with a plurality of pixels of a second colour image to be exhibited by the optical device, each pixel of the second colour image exhibiting a uniform colour, wherein;
the second array of microstructures comprises at least first and second sub-arrays of microstructures corresponding to respective first and second colour channels of the second colour image, each sub-array covering an area within a pixel corresponding to the proportion of the respective colour channel within the pixel such that the pixel exhibits the uniform colour, and further wherein, within the second array;
the microstructures of the first sub-array are configured to modify the angle of light incident to, and reflected from, the colour shifting layer in a first manner such that, at a substantially normal viewing angle of the optical device, the first sub array exhibits the base colour and at a second viewing angle of the optical device, the first sub-array exhibits a first colour, wherein said second viewing angle corresponds to viewing the optical device along a direction that is off the normal of the optical device, said second viewing angle being different to said first viewing angle and;
the microstructures of the second sub-array are configured to modify the angle of light incident to, and reflected from, the colour shifting layer in a second manner different to the first such that, at a substantially normal viewing angle of the optical device, the second sub-array exhibits said base colour and at said second viewing angle, the second sub-array exhibits a second colour different from the first colour;
such that at a substantially normal viewing angle, the optical device exhibits the base colour, and at said second viewing angle, the optical device exhibits the second colour image.

10. The optical device of claim 9, wherein the first viewing angle lies within a viewing plane that intersects the plane of the device along a first viewing direction, and the second viewing angle lies within a viewing plane that intersects the plane of the device along a second viewing direction, and wherein the first and second viewing directions are non-parallel, preferably wherein each microstructure has a primary axis orientated in a first direction lying in the plane of the optical device, wherein the first viewing direction is substantially perpendicular to the primary axes of the microstructures of the first array, and the second viewing direction is substantially perpendicular to the primary axes of the microstructures of the second array.

11. The optical device of claim 9 or claim 10, wherein the first array is arranged as a plurality of first image segments that in combination form the first colour image, and the second array is arranged as a plurality of second image segments that in combination form the second colour image, and wherein the plurality of first image segments are interlaced with the plurality of second image segments, preferably wherein either the image segments are elongate and the direction of interlacing is substantially perpendicular to the direction of elongation, or the image segments are arranged in a grid pattern, such that the image segments of the first and second arrays are interlaced along two directions.

12. The optical device of any of the preceding claims, wherein the optical device is a security device.

13. A security document comprising an optical device according to claim 12.

14. A method of manufacturing an optical device (100), comprising;
providing a colour shifting layer (10) that exhibits different colours dependent on the angle of incidence of incident light, and;
providing an array (200) of microstructures (20) so as to cover at least a part of the colour shifting layer and configured to modify the angle of light incident to, and reflected from, the colour shifting layer, **characterized in that**
the array of microstructures is formed in accordance with a template defining a plurality of pixels of a colour image to be exhibited by the optical device, each pixel exhibiting a uniform colour, the array of microstructures comprising at least first and second sub-arrays (200a, 200b) of microstructures corresponding to first and second colour channels of the template, each sub-array covering an area within a pixel corresponding to the proportion of the respective colour channel within the pixel such that the pixel exhibits the uniform colour, wherein;
the microstructures of the first sub-array (200a) are configured to modify the angle of light incident to, and reflected from, the colour shifting layer in a first manner such that, at a substantially normal viewing angle of the optical device, the first sub array exhibits a base colour and at a first viewing angle of the optical device, the first sub-array exhibits a first colour, wherein said first viewing angle corresponds to viewing the optical device along a direction that is off the normal of the optical device and;
the microstructures of the second sub-array (200b) are configured to modify the angle of light incident to, and reflected from, the colour shifting layer in a second manner different to the first such that, at a substantially normal viewing angle of the optical device, the second sub-array exhibits said base colour and at said first viewing angle, the second sub-array exhibits a second colour different from the first colour;
such that at a substantially normal viewing angle, the optical device exhibits the base colour, and at said first viewing angle, the optical device exhibits the colour image.

15. The method of claim 14, wherein the template is generated by;
providing a source colour image comprising a plurality of image pixels, each image pixel exhibiting a uniform colour, and;
for each image pixel of the source colour image, creating a corresponding template pixel based on the colour of the respective image pixel, each template pixel comprising an arrangement of at least two colour channels and their relative proportions required to generate the uniform colour for that pixel, wherein the colour image exhibited by the device at the first viewing angle is a version of the source colour image, preferably wherein each template pixel comprises colour zones defining the relative proportions of the first and second colour channels to be exhibited by the device based on the colour of the corresponding image pixel, and wherein; the sub-arrays are provided according to the colour zones of template pixels.

## Patentansprüche

1. Optische Vorrichtung (100), umfassend;
eine Farbverschiebungsschicht (10), die in Abhängigkeit von dem Einfallswinkel von einfallendem Licht unterschiedliche Farben zeigt, und;
ein Array (200) aus im Wesentlichen transparenten Mikrostrukturen (20), die wenigstens einen Teil der Farbverschiebungsschicht abdecken und dazu konfiguriert sind, den Winkel des auf die Farbverschiebungsschicht einfallenden und von dieser reflektierten Lichts zu modifizieren,
**dadurch gekennzeichnet, dass** das Array aus Mikrostrukturen in Übereinstimmung mit einer Mehrzahl von Pixeln eines von der optischen Vorrichtung zu zeigenden farbigen Bildes angeordnet ist, wobei jedes Pixel eine einheitliche Farbe zeigt, wobei;
das Array von Mikrostrukturen wenigstens ein erstes und ein zweites Teilarray (200a, 200b) von Mikrostrukturen umfasst, die einem jeweiligen ersten und zweiten Farbkanal entsprechen, wobei jedes Teilarray eine Fläche innerhalb eines Pixels abdeckt, die dem Anteil des jeweiligen Farbkanals innerhalb des Pixels entspricht, sodass das Pixel die einheitliche Farbe zeigt, und wobei ferner;
die Mikrostrukturen des ersten Teilarrays (200a) dazu konfiguriert sind, den Winkel des auf die Farbverschiebungsschicht einfallenden und von dieser reflektierten Lichts auf eine erste Weise zu modifizieren, sodass bei einem im Wesentlichen normalen Betrachtungswinkel der optischen Vorrichtung das erste Teilarray eine Grundfarbe zeigt und bei einem ersten Betrachtungswinkel der optischen Vorrichtung das erste Teilarray eine erste Farbe zeigt, wobei der erste Betrachtungswinkel dem Betrachten der optischen Vorrichtung entlang einer Richtung entspricht, die von der Normalen der optischen Vorrichtung versetzt ist, und;
die Mikrostrukturen des zweiten Teilarrays (200b) dazu konfiguriert sind, den Winkel des auf die Farbverschiebungsschicht einfallenden und von dieser reflektierten Lichts auf eine zweite Weise, die sich von der ersten Weise unterscheidet, zu modifizieren, sodass bei einem im Wesentlichen normalen Betrachtungswinkel der optischen Vorrichtung das zweite Teilarray die Grundfarbe zeigt und bei dem ersten Betrachtungswinkel das zweite Teilarray eine zweite, von der ersten Farbe verschiedene Farbe zeigt,
sodass die optische Vorrichtung bei einem im Wesentlichen normalen Betrachtungswinkel die Grundfarbe zeigt und die optische Vorrichtung bei dem ersten Betrachtungswinkel das farbige Bild zeigt.

2. Optische Vorrichtung nach einem der Ansprüche 1, wobei das Array von Mikrostrukturen ferner ein drittes Teilarray umfasst, das einem jeweiligen dritten Farbkanal entspricht, wobei das dritte Teilarray eine Fläche innerhalb eines Pixels abdeckt, die dem Anteil des dritten Farbkanals innerhalb des Pixels entspricht, sodass das Pixel die einheitliche Farbe zeigt, wobei;
die Mikrostrukturen des dritten Teilarrays dazu konfiguriert sind, den Winkel des auf die Farbverschiebungsschicht einfallenden und von dieser reflektierten Lichts auf eine dritte Weise, die sich von der ersten und zweiten Weise unterscheidet, zu modifizieren, sodass bei einem im Wesentlichen normalen Betrachtungswinkel der optischen Vorrichtung das dritte Teilarray die Grundfarbe zeigt und bei dem ersten Betrachtungswinkel das dritte Teilarray eine dritte, von der ersten und zweiten Farbe verschiedene Farbe zeigt, vorzugsweise wobei das erste, zweite und dritte Teilarray einem roten, grünen beziehungsweise blauen Kanal entsprechen.

3. Optische Vorrichtung nach Anspruch 1 oder 2, wobei die Mikrostrukturen der Teilarrays dazu konfiguriert sind, den Winkel des auf die Farbverschiebungsschicht einfallenden und von dieser reflektierten Lichts auf unterschiedliche Weise aufgrund von Unterschieden bei einem oder mehreren zu verändern von:
(a) Facettenwinkel;
(b) Orientierung;
(c) Brechungsindex.

4. Optische Vorrichtung nach einem der vorhergehenden Ansprüche, wobei jede Mikrostruktur wenigstens eine ebene oder gekrümmte Fläche umfasst, die mit der Ebene der Farbverschiebungsschicht einen Facettenwinkel von mehr als 0° und weniger als oder gleich 90° bildet.

5. Optische Vorrichtung nach einem der vorhergehenden Ansprüche, wobei die Mikrostrukturen verschiedener Teilarrays unterschiedliche Facettenwinkel aufweisen, sodass die Teilarrays bei dem ersten Betrachtungswinkel unterschiedliche Farben zeigen.

6. Optische Vorrichtung nach einem der vorhergehenden Ansprüche, wobei jede Mikrostruktur eine Hauptachse aufweist, die in einer ersten Richtung orientiert ist, die in der Ebene der optischen Vorrichtung liegt, wobei die Mikrostrukturen Prismen sind, die sich entlang ihrer Hauptachse erstrecken und vorzugsweise einen Querschnitt aufweisen, der ein Dreieck, ein Trapez, einen Bogen, ein Kreissegment oder ein elliptisches Segment ist, oder wobei die Mikrostrukturen im Wesentlichen pyramidenförmig sind.

7. Optische Vorrichtung nach einem der vorhergehenden Ansprüche, wobei jedes Pixel, das einen von Null verschiedenen Anteil eines Farbkanals zeigt, wenigstens drei Mikrostrukturen des jeweiligen Teilarrays, das diesem Farbkanal entspricht, vorzugsweise wenigstens fünf Mikrostrukturen des jeweiligen Teilarrays umfasst, das diesem Farbkanal entspricht.

8. Optische Vorrichtung nach einem der vorhergehenden Ansprüche, wobei das farbige Bild, das bei dem ersten Betrachtungswinkel gezeigt wird, ein Teil eines größeren Bildes ist, das von der optischen Vorrichtung gezeigt wird.

9. Optische Vorrichtung nach einem der vorhergehenden Ansprüche, ferner umfassend ein zweites Array aus im Wesentlichen transparenten Mikrostrukturen, die wenigstens einen Teil der Farbverschiebungsschicht abdecken und dazu konfiguriert sind, den Winkel des auf die Farbverschiebungsschicht einfallenden und von dieser reflektierten Lichts zu modifizieren, und in Übereinstimmung mit einer Mehrzahl von Pixeln eines von der optischen Vorrichtung zu zeigenden zweiten farbigen Bildes angeordnet ist, wobei jedes Pixel des zweiten farbigen Bildes eine einheitliche Farbe zeigt, wobei;
das zweite Array von Mikrostrukturen wenigstens ein erstes und ein zweites Teilarray von Mikrostrukturen umfasst, die einem jeweiligen ersten und zweiten Farbkanal des zweiten farbigen Bildes entsprechen, wobei jedes Teilarray eine Fläche innerhalb eines Pixels abdeckt, die dem Anteil des jeweiligen Farbkanals innerhalb des Pixels entspricht, sodass das Pixel die einheitliche Farbe zeigt, und wobei ferner innerhalb des zweiten Arrays;
die Mikrostrukturen des ersten Teilarrays dazu konfiguriert sind, den Winkel des auf die Farbverschiebungsschicht einfallenden und von dieser reflektierten Lichts auf eine erste Weise zu modifizieren, sodass bei einem im Wesentlichen normalen Betrachtungswinkel der optischen Vorrichtung das erste Teilarray eine Grundfarbe zeigt und bei einem zweiten Betrachtungswinkel der optischen Vorrichtung das erste Teilarray eine erste Farbe zeigt, wobei der zweite Betrachtungswinkel dem Betrachten der optischen Vorrichtung entlang einer Richtung entspricht, die von der Normalen der optischen Vorrichtung versetzt ist, wobei sich der zweite Betrachtungswinkel von dem ersten Betrachtungswinkel unterscheidet und;
die Mikrostrukturen des zweiten Teilarrays dazu konfiguriert sind, den Winkel des auf die Farbverschiebungsschicht einfallenden und von dieser reflektierten Lichts auf eine zweite Weise, die sich von der ersten Weise unterscheidet, zu modifizieren, sodass bei einem im Wesentlichen normalen Betrachtungswinkel der optischen Vorrichtung das zweite Teilarray die Grundfarbe zeigt und bei dem zweiten Betrachtungswinkel das zweite Teilarray eine zweite, von der ersten Farbe verschiedene Farbe zeigt,
sodass die optische Vorrichtung bei einem im Wesentlichen normalen Betrachtungswinkel die Grundfarbe zeigt und die optische Vorrichtung bei dem zweiten Betrachtungswinkel das zweite farbige Bild zeigt.

10. Optische Vorrichtung nach Anspruch 9, wobei der erste Betrachtungswinkel innerhalb einer Betrachtungsebene liegt, die die Ebene der Vorrichtung entlang einer ersten Betrachtungsrichtung schneidet, und der zweite Betrachtungswinkel innerhalb einer Betrachtungsebene liegt, die die Ebene der Vorrichtung entlang einer zweiten Betrachtungsrichtung schneidet, und wobei die erste und die zweite Betrachtungsrichtung nicht parallel sind, wobei vorzugsweise jede Mikrostruktur eine Hauptachse aufweist, die in einer ersten Richtung orientiert ist, die in der Ebene der optischen Vorrichtung liegt, wobei die erste Betrachtungsrichtung im Wesentlichen senkrecht zu den Hauptachsen der Mikrostrukturen des ersten Arrays ist und die zweite Betrachtungsrichtung im Wesentlichen senkrecht zu den Hauptachsen der Mikrostrukturen des zweiten Arrays ist.

11. Optische Vorrichtung nach Anspruch 9 oder 10, wobei das erste Array als eine Mehrzahl von ersten Bildsegmenten angeordnet ist, die in Kombination das erste farbige Bild ausbilden, und das zweite Array als eine Mehrzahl von zweiten Bildsegmenten angeordnet ist, die in Kombination das zweite farbige Bild ausbilden, und wobei die Mehrzahl von ersten Bildsegmenten mit der Mehrzahl von zweiten Bildsegmenten verschachtelt ist, wobei vorzugsweise entweder die Bildsegmente länglich sind und die Richtung der Verschachtelung im Wesentlichen senkrecht zu der Längsrichtung ist, oder die Bildsegmente in einem Gittermuster angeordnet sind, sodass die Bildsegmente des ersten und des zweiten Arrays entlang zweier Richtungen verschachtelt sind.

12. Optische Vorrichtung nach einem der vorhergehenden Ansprüche, wobei die optische Vorrichtung eine Sicherheitsvorrichtung ist.

13. Sicherheitsdokument, umfassend eine optische Vorrichtung nach Anspruch 12.

14. Verfahren zum Herstellen einer optischen Vorrichtung (100), umfassend;
Bereitstellen einer Farbverschiebungsschicht (10), die in Abhängigkeit von dem Einfallswinkel des einfallenden Lichts unterschiedliche Farben zeigt, und;
Bereitstellen eines Arrays (200) von Mikrostrukturen (20), um wenigstens einen Teil der Farbverschiebungsschicht abzudecken, und dazu konfiguriert, den Winkel des auf die Farbverschiebungsschicht einfallenden und von dieser reflektierten Lichts zu modifizieren, **dadurch gekennzeichnet, dass**
das Array von Mikrostrukturen in Übereinstimmung mit einer Schablone ausgebildet wird, die eine Mehrzahl von Pixeln eines von der optischen Vorrichtung zu zeigenden farbigen Bildes definiert, wobei jedes Pixel eine einheitliche Farbe zeigt, wobei das Array von Mikrostrukturen wenigstens ein erstes und ein zweites Teilarray (200a, 200b) von Mikrostrukturen umfasst, die dem ersten und dem zweiten Farbkanal der Schablone entsprechen, wobei jedes Teilarray eine Fläche innerhalb eines Pixels abdeckt, die dem Anteil des jeweiligen Farbkanals innerhalb des Pixels entspricht, sodass das Pixel die einheitliche Farbe zeigt, wobei;
die Mikrostrukturen des ersten Teilarrays (200a) dazu konfiguriert sind, den Winkel des auf die Farbverschiebungsschicht einfallenden und von dieser reflektierten Lichts auf eine erste Weise zu modifizieren, sodass bei einem im Wesentlichen normalen Betrachtungswinkel der optischen Vorrichtung das erste Teilarray eine Grundfarbe zeigt und bei einem ersten Betrachtungswinkel der optischen Vorrichtung das erste Teilarray eine erste Farbe zeigt, wobei der erste Betrachtungswinkel dem Betrachten der optischen Vorrichtung entlang einer Richtung entspricht, die von der Normalen der optischen Vorrichtung versetzt ist, und;
die Mikrostrukturen des zweiten Teilarrays (200b) dazu konfiguriert sind, den Winkel des auf die Farbverschiebungsschicht einfallenden und von dieser reflektierten Lichts auf eine zweite Weise, die sich von der ersten Weise unterscheidet, zu modifizieren, sodass bei einem im Wesentlichen normalen Betrachtungswinkel der optischen Vorrichtung das zweite Teilarray die Grundfarbe zeigt und bei dem ersten Betrachtungswinkel das zweite Teilarray eine zweite, von der ersten Farbe verschiedene Farbe zeigt,
sodass die optische Vorrichtung bei einem im Wesentlichen normalen Betrachtungswinkel die Grundfarbe zeigt und die optische Vorrichtung bei dem ersten Betrachtungswinkel das farbige Bild zeigt.

15. Verfahren nach Anspruch 14, wobei die Schablone erzeugt wird durch;
Bereitstellen eines farbigen Quellbildes, das eine Mehrzahl von Bildpixeln umfasst, wobei jedes Bildpixel eine einheitliche Farbe zeigt, und;
für jedes Bildpixel des farbigen Quellbilds, Erzeugen eines entsprechenden Schablonenpixels auf Grundlage der Farbe des jeweiligen Bildpixels, wobei jedes Schablonenpixel eine Anordnung von wenigstens zwei Farbkanälen und ihren relativen Anteilen umfasst, die erforderlich sind, um die einheitliche Farbe für dieses Pixel zu erzeugen, wobei das von der Vorrichtung bei dem ersten Betrachtungswinkel gezeigte farbige Bild eine Version des farbigen Quellbildes ist, wobei vorzugsweise jedes Schablonenpixel Farbzonen umfasst, die die relativen Anteile des ersten und des zweiten Farbkanals definieren, die von der Vorrichtung auf Grundlage der Farbe des entsprechenden Bildpixels gezeigt werden sollen, und wobei; die Teilarrays gemäß den Farbzonen der Schablonenpixel bereitgestellt werden.

## Revendications

1. Dispositif optique (100) comprenant :
une couche à variation chromatique (10) présentant différentes couleurs en fonction de l'angle d'incidence de la lumière incidente ; et
un réseau (200) de microstructures substantiellement transparentes (20) couvrant au moins une partie de la couche à variation chromatique, et configuré pour modifier l'angle de lumière incident sur la couche à variation chromatique, et reflétée par celle-ci, **caractérisé en ce que** ledit réseau de microstructures est agencé selon une pluralité de pixels d'une image en couleur devant être exposée par le dispositif optique, chaque pixel présentant une couleur uniforme,
le réseau de microstructures comprenant au moins des premier et deuxième sous-réseaux (200a, 200b) de microstructures correspondant à des premier et deuxième canaux de couleur respectifs, chaque sous-réseau couvrant une surface au sein d'un pixel correspondant à la proportion du canal de couleur respectif au sein du pixel, de sorte que le pixel présente la couleur uniforme, et, de plus,
les microstructures du premier sous-réseau (200a) étant configurées pour modifier l'angle de lumière incidente sur la couche de variation chromatique, et reflétée par celle-ci, d'une première manière, de sorte qu'à un angle de visualisation substantiellement normal du dispositif optique, le premier sous-réseau présente une couleur de base, et, à un premier angle de visualisation du dispositif optique, le premier sous-réseau présente une première couleur, ledit premier angle de visualisation correspondant à la visualisation du dispositif optique le long d'une direction autre que la normale du dispositif optique, et
les microstructures du deuxième sous-réseau (200b) étant configurées pour modifier l'angle de lumière incidente sur la couche de variation chromatique, et reflétée par celle-ci, d'une deuxième manière différente de la première, de sorte qu'à un angle de visualisation substantiellement normal du dispositif optique, le deuxième sous-réseau présente ladite couleur de base, et audit premier angle de visualisation, le deuxième sous-réseau présente une deuxième couleur différente de la première couleur ;
de sorte qu'à un angle de visualisation substantiellement normal, le dispositif optique présente la couleur de base, et audit premier angle de visualisation, le dispositif optique présente l'image en couleur.

2. Dispositif optique selon une quelconque des revendications contenues dans la revendication 1, le réseau de microstructures comprenant en outre un troisième sous-réseau correspondant à un troisième canal de couleur respectif, le troisième sous-réseau couvrant une surface au sein d'un pixel correspondant à la proportion du troisième canal de couleur au sein du pixel, de sorte que le pixel présente la couleur uniforme,
les microstructures du troisième sous-réseau étant configurées pour modifier l'angle de lumière incidente sur la couche de variation chromatique, et reflétée par celle-ci, d'une troisième manière différente des première et deuxième manières, de sorte qu'à un angle de visualisation substantiellement normal du dispositif optique, le troisième sous-réseau présente une troisième couleur différente des première et deuxième couleurs, de préférence les premier, deuxième et troisième sous-réseaux correspondant à des canaux rouge, vert et bleu respectivement.

3. Dispositif optique selon la revendication 1 ou la revendication 2, les microstructures des sous-réseaux étant configurées pour modifier l'angle de lumière incidente sur la couche de variation chromatique, et reflétée par celle-ci, de différentes manières en raison de différences dans un ou plusieurs des suivants :
(a) l'angle de facette ;
(b) l'orientation ;
(c) l'indice de réfraction.

4. Dispositif optique selon une quelconque des revendications précédentes, chaque microstructure comprenant au moins une face plane ou courbe formant un angle de facette supérieur à zéro degré et inférieur ou égal à 90 degrés avec le plan de la couche à variation chromatique.

5. Dispositif optique selon une quelconque des revendications précédentes, les microstructures de différents sous-réseaux présentant différents angles de facette, de sorte qu'au premier angle de visualisation, les sous-réseaux présentent différentes couleurs.

6. Dispositif optique selon une quelconque des revendications précédentes, chaque microstructure possédant un axe primaire orienté dans une première direction située dans le plan du dispositif optique, les microstructures étant des prismes s'étendant le long de leur axe primaire, et, de préférence, possédant une section transversale qui est un triangle, un trapèze, un arc, un segment circulaire, ou un segment elliptique, ou les microstructures étant substantiellement pyramidales.

7. Dispositif optique selon une quelconque des revendications précédentes, chaque pixel présentant une proportion non nulle d'un canal de couleur comprenant au moins trois microstructures du sous-réseau respectif correspondant à ce canal de couleur, de préférence au moins cinq microstructures du sous-réseau respectif correspondant à ce canal de couleur.

8. Dispositif optique selon une quelconque des revendications précédentes, l'image en couleur présentée au premier angle de visualisation faisant partie d'une image plus grande présentée par le dispositif optique.

9. Dispositif optique selon une quelconque des revendications précédentes, comprenant en outre un deuxième réseau de microstructures substantiellement transparentes couvrant au moins une partie de la couche à variation chromatique, et configuré pour modifier l'angle de lumière incident sur la couche à variation chromatique, et reflétée par celle-ci, et agencé selon une pluralité de pixels d'une deuxième image en couleur devant être exposée par le dispositif optique, chaque pixel de la deuxième image en couleur présentant une couleur uniforme,
le deuxième réseau de microstructures comprenant au moins des premier et deuxième sous-réseaux de microstructures correspondant à des premier et deuxième canaux de couleur respectifs de la deuxième image en couleur, chaque sous-réseau couvrant une surface au sein d'un pixel correspondant à la proportion du canal de couleur respectif au sein du pixel, de sorte que le pixel présente la couleur uniforme, et, de plus, au sein du deuxième réseau,
les microstructures du premier sous-réseau étant configurées pour modifier l'angle de lumière incidente sur la couche de variation chromatique, et reflétée par celle-ci, d'une première manière, de sorte qu'à un angle de visualisation substantiellement normal du dispositif optique, le premier sous-réseau présente la couleur de base et à un deuxième angle de visualisation du dispositif optique, le premier sous-réseau présente une première couleur, ledit deuxième angle de visualisation correspondant à la visualisation du dispositif optique le long d'une direction autre que la normale du dispositif optique, ledit deuxième angle de visualisation étant différent dudit premier angle de visualisation, et
les microstructures du deuxième sous-réseau étant configurées pour modifier l'angle de lumière incidente sur la couche de variation chromatique, et reflétée par celle-ci, d'une deuxième manière différente de la première, de sorte qu'à un angle de visualisation substantiellement normal du dispositif optique, le deuxième sous-réseau présente ladite couleur de base, et audit deuxième angle de visualisation, le deuxième sous-réseau présente une deuxième couleur différente de la première couleur ;
de sorte qu'à un angle de visualisation substantiellement normal, le dispositif optique présente la couleur de base, et audit deuxième angle de visualisation, le dispositif optique présente la deuxième image en couleur.

10. Dispositif optique selon la revendication 9, le premier angle de visualisation étant situé dans un plan de visualisation croisant le plan du dispositif le long d'une première direction de visualisation, et le deuxième angle de visualisation étant situé dans un plan de visualisation croisant le plan du dispositif le long d'une deuxième direction de visualisation, et les première et deuxième directions de visualisation étant non parallèles, de préférence chaque microstructure présentant un axe primaire orienté dans une première direction située dans le plan du dispositif optique, la première direction de visualisation étant substantiellement perpendiculaire aux axes primaires des microstructures du premier réseau, et la deuxième direction de visualisation étant substantiellement perpendiculaire aux axes primaires des microstructures du deuxième réseau.

11. Dispositif optique selon la revendication 9 ou la revendication 10, le premier réseau étant agencé comme une pluralité de segments de première image, qui, lorsqu'ils sont combinés, constituent la première image en couleur, et le deuxième réseau étant agencé comme une pluralité de segments de deuxième image, qui, lorsqu'ils sont combinés, constituent la deuxième image en couleur, et la pluralité de segments de première image étant entrelacés avec la pluralité de segments de deuxième image, de préférence soit les segments d'image sont allongés et la direction d'entrelacement est substantiellement perpendiculaire à la direction de l'allongement, soit les segments d'image sont agencés sous forme de grille, de sorte que les segments d'image des premier et deuxième réseaux sont entrelacés dans deux directions.

12. Dispositif optique selon une quelconque des revendications précédentes, le dispositif optique étant un dispositif de sécurité.

13. Document de sécurité comprenant un dispositif optique selon la revendication 12.

14. Procédé de fabrication d'un dispositif optique (100) comprenant :
l'agencement d'une couche à variation chromatique (10) présentant différentes couleurs en fonction de l'angle d'incidence de la lumière incidente ; et
l'agencement d'un réseau (200) de microstructures (20) de façon à couvrir au moins une partie de la couche à variation chromatique, et configuré pour modifier l'angle de lumière incident sur la couche à variation chromatique, et reflétée par celle-ci, **caractérisé en ce que**
le réseau de microstructures est agencé conformément à un modèle définissant une pluralité de pixels d'une image en couleur devant être exposée par le dispositif optique, chaque pixel présentant une couleur uniforme, le réseau de microstructures comprenant au moins des premier et deuxième sous-réseaux (200a, 200b) de microstructures correspondant à des premier et deuxième canaux de couleur du modèle, chaque sous-réseau couvrant une surface au sein d'un pixel correspondant à la proportion du canal de couleur respectif au sein du pixel, de sorte que le pixel présente la couleur uniforme,
les microstructures du premier sous-réseau (200a) étant configurées pour modifier l'angle de lumière incidente sur la couche de variation chromatique, et reflétée par celle-ci, d'une première manière, de sorte qu'à un angle de visualisation substantiellement normal du dispositif optique, le premier sous-réseau présente une couleur de base, et, à un premier angle de visualisation du dispositif optique, le premier sous-réseau présente une première couleur, ledit premier angle de visualisation correspondant à la visualisation du dispositif optique le long d'une direction autre que la normale du dispositif optique, et
les microstructures du deuxième sous-réseau (200b) étant configurées pour modifier l'angle de lumière incidente sur la couche de variation chromatique, et reflétée par celle-ci, d'une deuxième manière différente de la première, de sorte qu'à un angle de visualisation substantiellement normal du dispositif optique, le deuxième sous-réseau présente ladite couleur de base, et audit premier angle de visualisation, le deuxième sous-réseau présente une deuxième couleur différente de la première couleur ;
de sorte qu'à un angle de visualisation substantiellement normal, le dispositif optique présente la couleur de base, et audit premier angle de visualisation, le dispositif optique présente l'image en couleur.

15. Procédé selon la revendication 14, le modèle étant généré par :
l'agencement d'une image de couleur source comprenant une pluralité de pixels d'image, chaque pixel d'image présentant une couleur uniforme, et
pour chaque pixel d'image de l'image de couleur source, la création d'un pixel de modèle correspondant basé sur la couleur du pixel d'image respectif, chaque pixel de modèle comprenant un agencement d'au moins deux canaux de couleur et leurs proportions relatives requises pour générer la couleur uniforme pour ce pixel, l'image de couleur présentée par le dispositif au premier angle de visualisation étant une version de l'image de couleur source, de préférence chaque pixel de modèle comprenant des zones de couleur définissant les proportions relatives des premier et deuxième canaux de couleur devant être présentés par le dispositif d'après la couleur du pixel d'image correspondant, et
les sous-réseaux étant agencés en fonction des zones de couleur des pixels de modèle.
